# EUROPEAN PATENT SPECIFICATION

(11) **EP 3 744 593 B1**
(45) Date of publication and mention of the grant of the patent: **08.03.2023**
(21) Application number: 19743197.6
(22) Date of filing: 09.01.2019
(51) Int. Cl.: B60T 17/22, B60T 13/122, B60T 13/18, B60T 13/68

(54) **BRAKE CONTROL APPARATUS AND METHOD FOR DETECTING FAILURE IN BRAKE CONTROL APPARATUS**
BREMSSTEUERUNGSVORRICHTUNG UND VERFAHREN ZUR FEHLERERKENNUNG IN EINER BREMSSTEUERUNGSVORRICHTUNG
DISPOSITIF DE COMMANDE DE FREIN ET PROCÉDÉ DE DÉTECTION DE DÉFAILLANCE DANS UN DISPOSITIF DE COMMANDE DE FREIN

(30) Priority: 23.01.2018 JP 2018008581
(43) Date of publication of application: 02.12.2020
(73) Proprietor: Hitachi Astemo, Ltd., Hitachinaka-shi, Ibaraki 312-8503 (JP)
(72) Inventor: KATO, Shu, Hitachinaka-shi, Ibaraki 312-8503 (JP); OOSAWA, Toshiya, Hitachinaka-shi, Ibaraki 312-8503 (JP); KONISHI, Masaru, Hitachinaka-shi, Ibaraki 312-8503 (JP)
(74) Representative: Hoefer & Partner Patentanwälte mbB
(86) International application number: PCT/JP2019/000320
(87) International publication number: WO 2019/146404

(56) References cited:
- JP-A- H09 202 231
- JP-A- 2006 175 905
- JP-A- 2016 150 633
- JP-A- 2018 001 973
- US-A1- 2017 015 293

## Description

### TECHNICAL FIELD

The present invention relates to a brake control apparatus and a method for detecting a failure in a brake control apparatus.

### BACKGROUND ART

PTL 1 discloses a brake control apparatus for a brake apparatus in which two brake systems establish a connection between a master cylinder and each of wheel cylinders and are connected to each other via a communication fluid passage, and two communication valves are provided in the communication fluid passage and the discharge side of a pump is connected to the communication fluid passage between these communication valves. This brake control apparatus detects a fluid leak system from the two systems that has a fluid leak failure in the wheel cylinder based on a differential pressure between the two systems when actuating the pump and causing the two communication valves to alternately perform an opening/closing operation.

PTL 2 discloses a brake control apparatus for a brake apparatus in which two brake systems establish a connection between a master cylinder and each of wheel cylinders and are connected to each other via a communication fluid passage, and two communication valves are provided in the communication fluid passage and the discharge side of a pump is connected to the communication fluid passage between these communication valves. This brake control apparatus detects a fluid leak system based on a differential pressure between the two systems after increasing the hydraulic pressures in both the systems to predetermined hydraulic pressures and then closing both the communication valves.

### CITATION LIST

### PATENT LITERATURE

[PTL 1] Japanese Patent Application Public Disclosure JP 2014- 151 806 A
[PTL 2] Japanese Patent Application Public Disclosure JP 2015- 182 631 A

### SUMMARY OF INVENTION

### TECHNICAL PROBLEM

However, the above-described conventional techniques are unintentionally able to increase the pressures according to a target hydraulic pressure with the aid of feedback control when the leak of the brake fluid is little, thereby raising a possibility of failing to accurately detect the failure due to the brake fluid leak.

One of objects of the present invention is to provide a brake control apparatus and a method for detecting a failure in a brake control apparatus capable of detecting the failure with improved accuracy.

### SOLUTION TO PROBLEM

The object underlying the present invention is achieved by a brake apparatus according to claim 1 and by a method for detecting a failure in the brake apparatus according to claim 11. Preferred embodiments are defined in the respective dependent claims. According to one aspect of the present invention, a method for detecting a failure in a brake control apparatus includes detecting a possibility of a failure based on a first hydraulic pressure in a connection fluid passage that is determined based on the number of rotations of a motor and a second hydraulic pressure detected by a hydraulic sensor configured to detect a hydraulic pressure in the connection fluid passage.

Therefore, the failure can be detected with improved accuracy.

### BRIEF DESCRIPTION OF DRAWINGS

Fig. 1 illustrates a configuration of a brake control apparatus according to a first embodiment of the invention.
Fig. 2 is a block diagram illustrating a calculation of a first hydraulic pressure according to the first embodiment.
Fig. 3 is a flowchart illustrating an operation for detecting a brake fluid leak according to the first embodiment.
Fig. 4 is a timing chart when performing the operation for detecting the brake fluid leak at the time of a fluid leak in an S system according to the first embodiment.
Fig. 5 is a timing chart when performing the operation for detecting the brake fluid leak at the time of a significant outward fluid leak in the S system according to the first embodiment.
Fig. 6 is a flowchart illustrating an operation for detecting the brake fluid leak according to a second embodiment of the invention.
Fig. 7 is a timing chart when performing a detection mode without the fluid leak occurring according to the second embodiment.
Fig. 8 is a timing chart when performing the detection mode with the fluid leak occurring according to the second embodiment.

### DESCRIPTION OF EMBODIMENTS

### [First Embodiment]

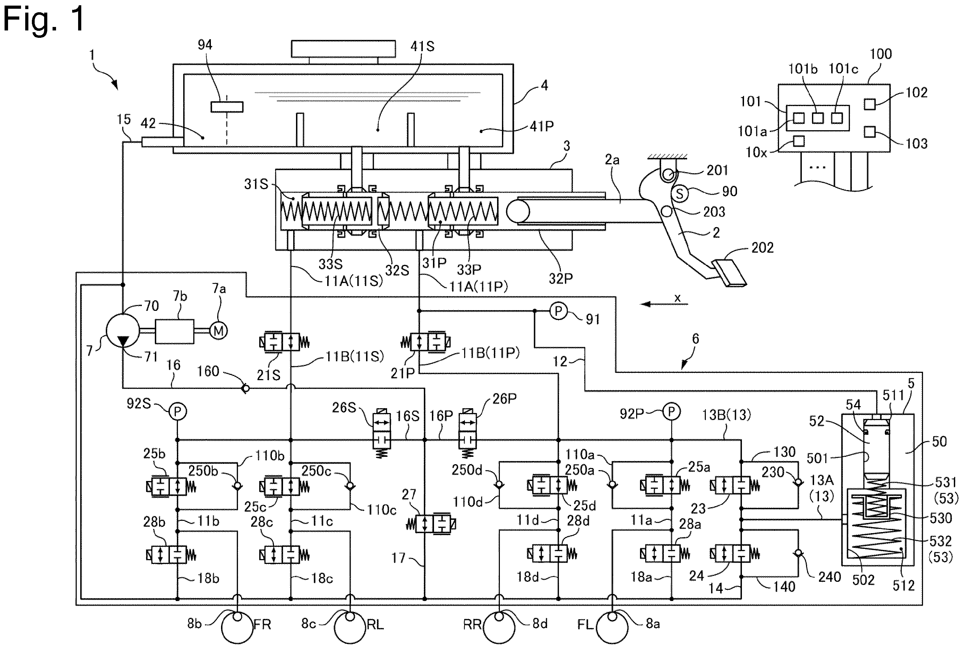

Fig. 1 illustrates a configuration of a brake control apparatus 1 according to the first embodiment.

The brake control apparatus 1 is a hydraulic brake control apparatus preferably usable for an electric vehicle. The electric vehicle is, for example, a hybrid automobile including a motor generator (a rotational electric machine) besides an engine (an internal combustion engine) or an electric automobile including only the motor generator as a power source for driving wheels. The brake control apparatus 1 may also be applied to a vehicle using only the engine as the power source. The brake control apparatus 1 supplies brake fluid to a wheel cylinder 8 (8a to 8d) mounted on each of wheels FL to RR of the vehicle to generate a brake hydraulic pressure (a wheel cylinder pressure Pw). The brake control apparatus 1 moves a frictional member by the wheel cylinder pressure Pw to press the friction member against a rotational member on the wheel side, thereby generating a frictional force. By this operation, the brake control apparatus 1 applies a hydraulic braking torque to each of the wheels FL to RR. Now, the wheel cylinder 8 may be a wheel cylinder in a drum brake mechanism besides a cylinder of a hydraulic brake caliper in a disk brake mechanism. The brake control apparatus 1 includes brake piping of two systems, i.e., a P (primary) system and an S (secondary) system, and employs, for example, an X piping type configuration. The brake control apparatus 1 may employ another piping configuration, such as a front/rear piping type configuration. Hereinafter, when a member corresponding to the P system and a member corresponding to the S system are distinguished from each other, indexes P and S will be added at the ends of the respective reference numerals.

A brake pedal 2 is a brake operation member that receives the input of a brake operation performed by a driver. The brake pedal 2 is a so-called suspended-type brake pedal, and the proximal end thereof is rotatably supported by a shaft 201. A pad 202, which is used as a target that the driver presses, is fixed at the distal end of the brake pedal 2. One end of a pushrod 2a is connected rotatably via a shaft 203 at the proximal side of the brake pedal 2 between the shaft 201 and the pad 202. A master cylinder 3 generates a brake hydraulic pressure (a master cylinder pressure Pm) by being actuated by the operation performed on the brake pedal 2 by the driver (the brake operation). The brake control apparatus 1 does not include a negative-pressure booster that boosts or amplifies a brake operation force (a force F pressing the brake pedal 2) by utilizing an intake negative pressure generated by the engine of the vehicle. Therefore, the brake control apparatus 1 can be reduced in size, and is also preferably usable for an electric vehicle not including a negative pressure source (the engine in most cases). The master cylinder 3 is connected to the brake pedal 2 via the pushrod 2a, and is also replenished with the brake fluid from a reservoir tank (a reservoir) 4. The reservoir 4 is a brake fluid source that stores the brake fluid therein, and is a low-pressure portion opened to the atmospheric pressure. The bottom portion side (the vertically lower side) inside the reservoir 4 is partitioned into a primary hydraulic chamber space 41P, a secondary hydraulic chamber space 41S, and a pump intake space 42 by a plurality of partition members each having a predetermined height. A fluid level sensor 94 is set up in the reservoir 4. The fluid level sensor 94 detects the level of the brake fluid amount in the reservoir 4. The fluid level sensor 94 is used to issue a warning of a reduction in the fluid level in the reservoir 4, and detects the fluid level discretely. The fluid level sensor 94 includes a fixed member and a floating member. The fixed member is fixed to the inner wall of the reservoir 4, and includes a switch. The switch is mounted at a position that is located at generally the same height as the fluid level. The floating member has buoyancy in the brake fluid, and is set so as to be vertically movable relative to the fixed member according to an increase and reduction in the brake fluid amount (the fluid level). When the brake fluid amount in the reservoir 4 reduces and the floating member moves so as to drop to a predetermined fluid level, the switch on the fixed member is switched from an OFF state to an ON state. By this switching, the fluid level sensor 94 detects the reduction in the fluid level. The specific configuration of the fluid level sensor 94 is not limited to the configuration that discretely detects the fluid level as described above (the switch), and may be a configuration that continuously detects the fluid level (analog detection).

The master cylinder 3 is a tandem-type master cylinder, and includes a primary piston 32P and a secondary piston 32S as master cylinder pistons axially movable according to the brake operation. These pistons 32P and 32S are arranged in series. The primary piston 32P is connected to the pushrod 2a. The secondary piston 32S is configured as a free piston.

A stroke sensor 90 is mounted on the brake pedal 2. The stroke sensor 90 detects the amount of a displacement of the brake pedal 2 (a pedal stroke S). The stroke sensor 90 may be mounted on the pushrod 2a or the primary piston 32P and detect a piston stroke Sp. In this case, the pedal stroke S corresponds to a value resulting from multiplying the amount of an axial displacement of the pushrod 2a or the primary piston 32P (a stroke amount) by a pedal ratio K of the brake pedal. K is the ratio of the pedal stroke S to the stroke amount of the primary piston 32P, and is set to a predetermined value. K can be calculated based on, for example, the ratio of the distance from the shaft 201 to the pad 202 to the distance from the shaft 201 to the shaft 203. In the following description, an x axis is set to the direction in which the pushrod 2a moves, and an x-axis positive direction is defined to be the direction of the x-axis direction corresponding to an increase in the pedal stroke.

A stroke simulator 5 is actuated in reaction to the brake operation performed by the driver. The stroke simulator 5 generates the pedal stroke S by an inflow of the brake fluid transmitted out from inside the master cylinder 3 according to the brake operation performed by the driver into the stroke simulator 5. A piston 52 of the stroke simulator 5 is actuated axially in a cylinder 50 by the brake fluid supplied from the master cylinder 3. By this operation, the stroke simulator 5 generates an operation reaction force accompanying the brake operation performed by the driver.

A hydraulic unit 6 is a braking control unit capable of generating the brake hydraulic pressure independently of the brake operation performed by the driver. An electronic control unit (hereinafter referred to as an ECU) 100 is a control unit that controls the actuation of the hydraulic unit 6. The hydraulic unit 6 receives the supply of the brake fluid from the reservoir 4 or the master cylinder 3. The hydraulic unit 6 is disposed between the wheel cylinders 8 and the master cylinder 3, and can supply the master cylinder pressure Pm or a control hydraulic pressure to each of the wheel cylinders 8a to 8d individually. The hydraulic unit 6 includes a pump 7, a motor 7a, and a plurality of control valves (electromagnetic valves 26 and the like) as hydraulic devices (actuators) for generating the control hydraulic pressure. The pump 7 sucks in the brake fluid from a brake fluid source other than the master cylinder 3 (the reservoir 4 or the like), and discharges the brake fluid toward the wheel cylinders 8. For example, a plunger pump or a gear pump is used as the pump 7. The pump 7 is used in common by both the P and S systems, and is rotationally driven by the electric motor 7a as the driving source. For example, a brushed direct-current motor or a brushless motor is used as the motor 7a. Further, the motor 7a includes a rotation number detector 7b as a rotation number detection portion. The electromagnetic valves 26 and the like perform opening/closing operations according to control signals to switch communication states of fluid passages 11 and the like. By this operation, the hydraulic unit 6 controls the flow of the brake fluid. The hydraulic unit 6 can increase the pressures in the wheel cylinders 8 with use of the hydraulic pressure generated by the pump 7 with the master cylinder 3 and the wheel cylinders 8 out of communication with each other. Further, the hydraulic unit 6 includes hydraulic sensors 91 to 92, which detect hydraulic pressures at various locations such as the discharge pressure of the pump 7 and the master cylinder pressure Pm.

Information input to the ECU 100 includes detected values output from the rotation number detector 7b, the stroke sensor 90, and each of the hydraulic sensors 91 and 92, and information regarding the running state transmitted from the vehicle side. The ECU 100 performs information processing based on these various kinds of information according to a program installed therein. Further, the ECU 100 outputs an instruction signal to each of the actuators in the hydraulic unit 6 according to a result of this processing, thereby controlling them. More specifically, the ECU 100 controls the opening/closing operations of the electromagnetic valves 26 and the like, and the number of rotations of the motor 7a (i.e., the discharge amount of the pump 7). By this control, the ECU 100 controls the wheel cylinder pressure Pw at each of the wheels FL to RR, thereby realizing various kinds of brake control. For example, the ECU 100 realizes boosting control, anti-lock control, brake control for vehicle motion control, autonomous brake control, regenerative cooperation brake control, and the like. The boosting control assists the brake operation by generating a hydraulic braking force by which the brake operation force input by the driver (the pressing force) is insufficient. The anti-lock control prevents a slip (a lock tendency) of the wheels FL to RR due to the braking. The vehicle motion control includes vehicle behavior stability control for preventing a sideslip and the like. The autonomous brake control is adaptive cruise control or the like. The regenerative cooperation brake control controls the wheel cylinder pressure Pw in such a manner that a target deceleration is achieved in cooperation with the regenerative brake.

A primary hydraulic chamber 31P is defined between the two pistons 32P and 32S of the master cylinder 3. A compression coil spring 33P is set in the primary hydraulic chamber 31P. A secondary hydraulic chamber 31S is defined between the piston 32S and the end portion of the cylinder 3 in the x-axis positive direction. A compression coil spring 33S is set in the secondary hydraulic chamber 31S. The first fluid passage (a connection fluid passage) 11 is opened to each of the hydraulic chambers 31P and 31S. Each of the hydraulic chambers 31P and 31S is connectable to the hydraulic unit 6 and is also communicable with the wheel cylinders 8 via the first fluid passage (the connection fluid passage) 11.

The driver's operation of pressing the brake pedal 2 causes the strokes of both the pistons 32P and 32S to the x-axis positive direction side, thereby generating the master cylinder pressure Pm according to a reduction in the volume of each of the hydraulic chambers 31P and 31S. Generally equal master cylinder pressures Pm are generated in the two hydraulic chambers 31P and 31S. As a result, the brake fluid is supplied from each of the hydraulic chambers 31P and 31S toward the wheel cylinders 8 via the first fluid passages 11 (the connection fluid passage). The master cylinder 3 can increase the pressures in the first wheel cylinders 8a and 8d of the P system via the first fluid passage (a first connection fluid passage) 11P with use of the master cylinder pressure Pm generated in the primary hydraulic chamber 31P. Further, the master cylinder 3 can increase the pressures in the second wheel cylinders 8b and 8c of the S system via the first fluid passage (a second connection fluid passage) 11S with use of the master cylinder pressure Pm generated in the secondary hydraulic chamber 31S.

Next, the configuration of the stroke simulator 5 will be described.

The stroke simulator 5 includes the cylinder 50, the piston 52, and a spring 53. Fig. 1 illustrates a cross-section taken along the central axis of the cylinder 50 of the stroke simulator 5. The cylinder 50 is cylindrical, and has a cylindrical inner peripheral surface. The cylinder 50 includes a piston containing portion 501 and a spring containing portion 502. The piston containing portion 501 is smaller in diameter than the spring containing portion 502. The piston 52 is movable in the axial direction of the cylinder 50 along the inner peripheral surface of the piston containing portion 501 on the inner peripheral side of the piston containing portion 501. The piston 52 is a partition wall separating the inside of the cylinder 50 into at least two chambers (a positive pressure chamber 511 and a back-pressure chamber 512). The positive pressure chamber 511 and the back-pressure chamber 512 are defined on one side and the other side of the piston 52, respectively, inside the cylinder 50. The positive pressure chamber 511 is a space surrounded by the piston 52 and the piston containing portion 501. A second fluid passage 12, which will be described below, is constantly opened to the positive pressure chamber 511. The back-pressure chamber 512 is a space surrounded by the piston 52, the spring containing portion 502, and the piston containing portion 501. A fluid passage 13A, which will be described below, is constantly opened to the back-pressure chamber 512.

A piston seal 54 is set on the outer periphery of the piston 52 so as to extend in the direction around the central axis of the piston 52 (a circumferential direction). The piston seal 54 is in sliding contact with the inner peripheral surface of the piston containing portion 501, and seals between the inner peripheral surface of the piston containing portion 501 and the outer peripheral surface of the piston 52. The piston seal 54 is a separation seal member that seals between the positive pressure chamber 511 and the back-pressure chamber 512 to thereby fluid-tightly separate them, and complements the function of the piston 52 as the above-described separation member. The spring 53 is a compression coil spring set in the back-pressure chamber 512, and constantly biases the piston 52 in the direction for reducing the volume of the positive pressure chamber 511. The spring 53 generates a reaction force according to the displacement amount of the piston 52. The spring 53 includes a first spring 531 and a second spring 532. The first spring 531 is smaller in diameter and shorter in length than the second spring 532, and has a short wire diameter. The spring constant of the first spring 531 is smaller than the second spring 532. These first and second springs 531 and 532 are disposed in series between the piston 52 and the cylinder 50 (the spring containing portion 502) via a retainer member 530.

Next, the hydraulic circuit of the hydraulic unit 6 will be described.

Members corresponding to the individual wheels FL to RR will be distinguished from one another if necessary, by adding indexes a to d at the ends of reference numerals thereof, respectively. The first fluid passages (the connection fluid passage) 11 as the connection fluid passage connect the hydraulic chambers 31 of the master cylinder 3 and the wheel cylinders 8 to each other. A first shut-off valve 21P and a second shut-off valve 21S are set in the first fluid passage (the first connection fluid passage) 11P and the first fluid passage (the second connection fluid passage) 11S, respectively. The shut-off valves 21 are normally-opened (opened when no electric power is supplied) electromagnetic valves mounted in the first fluid passages (the connection fluid passage) 11. The first fluid passages (the connection fluid passage) 11 are each divided into a first fluid passage (the connection fluid passage) 11A on the master cylinder 3 side and a first fluid passage (the connection fluid passage) 11B on the wheel cylinder 8 side by the shut-off valve 21. SOL/V IN valves 25 are normally-opened electromagnetic valves mounted in correspondence with the respective wheels FL to RR (in the fluid passages 11a to 11d) on the wheel cylinder 8 side with respect to the shut-off valves 21 in the first fluid passages (the connection fluid passage) 11 (the first fluid passages 11B). A bypass fluid passage 110 is provided in parallel with each of the first fluid passages (the connection fluid passage) 11 while bypassing the SOL/V IN 25. A check valve 250 is provided in the bypass fluid passage 110. The check valve 250 permits only a flow of the brake fluid heading from the wheel cylinder 8 side toward the master cylinder 3 side.

An intake fluid passage 15 is a fluid passage connecting the reservoir 4 (the pump intake space 42) and an intake portion 70 of the pump 7. A discharge fluid passage 16 connects a discharge portion 71 of the pump 7 and portions in the first fluid passages (the connection fluid passage) 11B between the shut-off valves 21 and the SOL/V INs 25. A check valve 160 is mounted in the discharge fluid passage 16, and permits only a flow of the brake fluid heading from one side where the discharge portion 71 of the pump 7 is located (the upstream side) to the first fluid passage 11 side (the downstream side). The check valve 160 is a discharge valve provided to the pump 7. The discharge fluid passage 16 branches into a fluid passage 16P of the P system and a fluid passage 16S of the S system on the downstream side of the check valve 160. The individual fluid passages 16P and 16S are connected to the first fluid passage (the first connection fluid passage) 11P of the P system and the first fluid passage (the second connection fluid passage) 11S of the S system, respectively. The fluid passages 16P and 16S function as a communication fluid passage connecting the first fluid passage (the first connection fluid passage) 11P and the first fluid passage (the second connection fluid passage) 11S to each other. A first communication valve 26P is a normally-closed (closed when no electric power is supplied) electromagnetic valve mounted in the fluid passage 16P. A second communication valve 26S is a normally-closed electromagnetic valve mounted in the fluid passage 16S. The pump 7 is a second hydraulic source capable of generating the wheel cylinder pressures Pw by generating the hydraulic pressures in the first fluid passages 11 with use of the brake fluid supplied from the reservoir 4. The pump 7 is connected to the wheel cylinders 8 (8a to 8d) via the above-described communication fluid passage (the discharge fluid passages 16P and 16S), and the first fluid passage (the first connection fluid passage) 11P and the first fluid passage (the second connection fluid passage) 11S, and can increase the pressures in the wheel cylinders 8 by discharging the brake fluid to the above-described communication fluid passage (the discharge fluid passages 16P and 16S).

A first pressure reduction fluid passage (a return flow fluid passage) 17 connects a portion in the discharge fluid passage 16 between the check valve 160 and the communication valves 26, and the intake fluid passage 15 to each other. A pressure adjustment valve 27 is a normally-opened electromagnetic valve as a first pressure reduction valve mounted in the first pressure reduction fluid passage (the return flow fluid passage) 17. The pressure adjustment valve 27 may be a normally-closed valve. Second pressure reduction fluid passages 18 connect the wheel cylinder 8 side of the first fluid passages (the connection fluid passage) 11B with respect to the SOL/V INs 25, and the intake fluid passage 15 to each other. A solenoid OUT valve SOL/V OUT 28 is a normally-closed electromagnetic valve as a second pressure reduction valve mounted in each of the second pressure reduction fluid passages 18. In the first embodiment, the first pressure reduction fluid passage (the return flow fluid passage) 17 on the intake fluid passage 15 side with respect to the pressure adjustment valve 27, and the second pressure reduction fluid passages 18 on the intake fluid passage 15 side with respect to the SOL/V OUTs 28 share a part thereof with each other.

The second fluid passage (a simulator fluid passage) 12 branches off from the first fluid passage (the connection fluid passage) 11A, and is connected to the stroke simulator 5. The second fluid passage (the simulator fluid passage) 12 connects the primary hydraulic chamber 31P of the master cylinder 3 and the positive pressure chamber 511 of the stroke simulator 5 to each other, together with the first fluid passage (the connection fluid passage) 11A. The primary hydraulic chamber 31P and the second fluid passage 12 (the simulator fluid passage) may be connected directly to each other instead of being connected via the first fluid passage (the connection fluid passage) 11A. The third fluid passage 13 connects the back-pressure chamber 512 of the stroke simulator 5 and the first fluid passage 11 to each other. More specifically, the third fluid passage 13 branches off from a portion in the first fluid passage (the first connection fluid passage) 11P between the first shut-off valve 21P and the SOL/V INs 25 (the first fluid passage 11B), and is connected to the back-pressure chamber 512. A stroke simulator IN valve SS/V IN 23 is a normally-closed electromagnetic valve mounted in the third fluid passage 13. The third fluid passage 13 is divided into the fluid passage 13A on the back-pressure chamber 512 side and a fluid passage 13B on the first fluid passage (the connection fluid passage) 11 side by the SS/V IN 23. A bypass fluid passage 130 is provided in parallel with the third fluid passage 13 while bypassing the SS/V IN 23. The bypass fluid passage 130 connects the fluid passage 13A and the fluid passage 13B to each other. A check valve 230 is mounted in the bypass fluid passage 130. The check valve 230 permits a flow of the brake fluid heading from the back-pressure chamber 512 side (the fluid passage 13A) toward the first fluid passage (the connection fluid passage) 11 side (the fluid passage 13B), and prohibits a flow of the brake fluid in the opposite direction.

A fourth fluid passage 14 connects the back-pressure chamber 512 of the stroke simulator 5 and the reservoir 4 to each other. The fourth fluid passage 14 connects a portion in the third fluid passage 13 between the back-pressure chamber 512 and the SS/V IN 23 (the fluid passage 13A), and the intake fluid passage 15 (or the first pressure reduction fluid passage (the return flow fluid passage) 17 on the intake fluid passage 15 side with respect to the pressure adjustment valve 27, and the second pressure reduction fluid passages 18 on the intake fluid passage 15 side with respect to the SOL/V OUTs 28). The fourth fluid passage 14 may be directly connected to the back-pressure chamber 512 or the reservoir 4. A stroke simulator OUT valve SS/V OUT 24 is a normally-closed electromagnetic valve mounted in the fourth fluid passage 14. A bypass fluid passage 140 is provided in parallel with the fourth fluid passages 14 while bypassing the SS/V OUT 24. A check valve 240 is mounted in the bypass fluid passage 140. The check valve 240 permits a flow of the brake fluid heading from the reservoir 4 (the intake fluid passage 15) side toward the third fluid passage 13A side, i.e., the back-pressure chamber 512 side, and prohibits a flow of the brake fluid in the opposite direction.

The shut-off valves 21, the SOL/V INs 25, and the pressure adjustment valve 27 are each a proportional control valve, the opening degree of which is adjusted according to an electric current supplied to the solenoid. The other valves, i.e., the SS/V IN 23, the SS/V OUT 24, the communication valves 26, and the SOL/V OUTs 28 are each a two-position (ON/OFF) valve, which is controlled to be switched between two values, i.e., being opened and being closed. The above-described other valves can also be embodied with use of a proportional control valve. The hydraulic sensor 91 is mounted at a portion of the first fluid passage (the first connection fluid passage) 11P between the first shut-off valve 21P and the master cylinder 3 (the first fluid passage 11A). The hydraulic sensor 91 detects the hydraulic pressure at this portion (the master cylinder pressure Pm and the hydraulic pressure in the positive pressure chamber 511 of the stroke simulator 5). Hydraulic sensors 92 (a primary system first hydraulic sensor 92P and a secondary system second hydraulic sensor 92S) are mounted at portions in the first fluid passages 11 between the shut-off valves 21 and the SOL/V INs 25. The hydraulic sensors 92 detect the hydraulic pressures at these portions (the wheel cylinder pressures). A first system is formed by a brake system (the first fluid passages 11) that connects the hydraulic chambers 31 of the master cylinder 3 and the wheel cylinders 8 to each other with the shut-off valves 21 actuated in the valve-opening directions. The first system can realize pressing force brake (non-boosting control) by generating the wheel cylinder pressures Pw from the master cylinder pressures Pm generated with use of the pressing force. On the other hand, a second system is formed by a brake system (the intake fluid passage 15, the discharge fluid passage 16, and the like) that includes the pump 7 and connects the reservoir 4 and the wheel cylinders 8 to each other with the shut-off valves 21 actuated in the valve-closing directions. The second system constructs a so-called brake-by-wire device, which generates the wheel cylinder pressures Pw from the hydraulic pressure generated with use of the pump 7, and can realize the boosting control and the like as brake-by-wire control. At the time of the brake-by-wire control (hereinafter simply referred to as by-wire control), the stroke simulator 5 creates the operation reaction force according to the brake operation performed by the driver.

The ECU 100 includes a by-wire control portion 101, a pressing force brake portion 102, a fail-safe portion 103, and an electric power source operation portion 10x. The by-wire control portion 101 closes the shut-off valves 21 to increase the pressures in the wheel cylinders 8 by the pump 7 according to the state of the brake operation performed by the driver. In the following description, specific examples thereof will be described. The by-wire control portion 101 includes a brake operation state detection portion 101a, a target wheel cylinder pressure calculation portion 101b, and a wheel cylinder pressure control portion 101c. The brake operation state detection unit 101a detects the pedal stroke S as the brake operation amount input by the driver upon receiving the input of the value detected by the stroke sensor 90. Further, the brake operation state detection portion 101a detects whether the driver is performing the brake operation (whether the brake pedal 2 is being operated) based on the pedal stroke S. Alternatively, a pressing force sensor configured to detect the pressing force F may be provided and the brake operation amount may be detected or estimated based on the value detected thereby. Alternatively, the brake operation amount may be detected or estimated based on the value detected by the hydraulic sensor 91. That is, not only the pedal stroke S but also another appropriate variable may be used as the brake operation amount for use in the control.

The target wheel cylinder pressure calculation portion 101b calculates a target wheel cylinder pressure Pw*. For example, at the time of the boosting control, the target wheel cylinder pressure calculation portion 101b calculates the target wheel cylinder pressure Pw* that meets an ideal relationship (brake characteristic) between the pedal stroke S and the brake hydraulic pressure requested by the driver (the vehicle deceleration requested by the driver) according to a predetermined boosting ratio based on the detected pedal stroke S. For example, the above-described ideal relationship for calculating the target wheel cylinder pressure Pw* is defined to be a predetermined relationship between the pedal stroke S and the wheel cylinder pressure Pw that would be realized when a brake apparatus including a negative-pressure booster normal in size actuates the negative-pressure booster.

The wheel cylinder pressure control portion 101c actuates the shut-off valves 21 in the valve-closing directions, thereby bringing the hydraulic unit 6 into a state capable of generating the wheel cylinder pressures Pw with use of the pump 7 (the second system) (pressure increase control). The wheel cylinder pressure control portion 101c controls each of the actuators in the hydraulic unit 6 in this state, thereby performing hydraulic control for realizing the target wheel cylinder pressure Pw* (for example, the boosting control). More specifically, the wheel cylinder pressure control portion 101c actuates the shut-off valves 21 in the valve-closing directions, the communication valves 26 in the valve-opening directions, and the pressure adjustment valve 27 in the valve-closing direction, and also actuates the pump 7. Controlling each of the actuators in this manner allows desired brake fluid to be transmitted from the reservoir 4 side to the wheel cylinders 8 via the intake fluid passage 15, the pump 7, the discharge fluid passage 16, and the first fluid passages (the connection fluid passage) 11. The brake fluid discharged from the pump 7 flows into the first fluid passages (the connection fluid passage) 11B via the discharge fluid passage 16. The pressure in each of the wheel cylinders 8a to 8d is increased due to the inflow of this brake fluid into each of the wheel cylinders 8a to 8d. In other words, the hydraulic unit 6 increases the pressures in the wheel cylinders 8 with use of the hydraulic pressure generated in the first fluid passages (the connection fluid passage) 11B with use of the pump 7. At this time, the desired braking force can be acquired by performing feedback control on the number of rotations of the pump 7 and the valve-opening state (the opening degree and/or the like) of the pressure adjustment valve 27 so that the values detected by the hydraulic sensors 92 are adjusted closer to the target wheel cylinder pressure Pw*. More specifically, the wheel cylinder pressures Pw can be adjusted by controlling the valve-opening state of the pressure adjustment valve 27 and allowing the brake fluid to leak from the discharge fluid passage 16 or the first fluid passages (the connection fluid passage) 11 to the intake fluid passage 15 via the pressure adjustment valve 27 as appropriate. At this time, the hydraulic unit 6 actuates the shut-off valves 21 in the valve-closing directions to block the communication between the master cylinder 3 side and the wheel cylinder 8 side, thereby facilitating the control of the wheel cylinder pressures independently of the brake operation performed by the driver.

On the other hand, the wheel cylinder pressure control portion 101c actuates the SS/V OUT 24 in the valve-opening direction. By this operation, the communication is established between the back-pressure chamber 512 of the stroke simulator 5 and the intake fluid passage 15 (the reservoir 4) side. Therefore, when the brake fluid is discharged from the master cylinder 3 according to the operation of pressing the brake pedal 2, and this brake fluid flows into the positive pressure chamber 511 of the stroke simulator 5, the piston 52 is actuated. As a result, the pedal stroke Sp is generated. At this time, the brake fluid flows out from the back-pressure chamber 512 by a fluid amount equivalent to the fluid amount flowing into the positive pressure chamber 511. This brake fluid is discharged toward the intake fluid passage 15 (the reservoir 4) side via the third fluid passage 13A and the fourth fluid passage 14. The fourth fluid passage 14 can fulfill this function only by being connected to a low-pressure portion into which the brake fluid can flow, and does not necessarily have to be connected to the reservoir 4. Further, the operation reaction force applied to the brake pedal 2 (the pedal reaction force) is generated due to the force with which the spring 53 of the stroke simulator 5, the hydraulic pressure in the back-pressure chamber 512, and the like press the piston 52. In other words, the stroke simulator 5 generates the characteristic of the brake pedal 2 (an F-S characteristic) at the time of the by-wire control.

The pressing force brake portion 102 actuates the shut-off valves 21 in the valve-opening directions to increase the pressures in the wheel cylinders 8 with use of the master cylinder 3. The pressing force brake portion 102 actuates the shut-off valves 21 in the valve-opening directions, thereby bringing the hydraulic unit 6 into a state capable of generating the wheel cylinder pressures Pw from the master cylinder pressures Pm (the first system) and thus realizing the pressing force brake. At this time, the pressing force brake portion 102 actuates the SS/V OUT 24 in the valve-closing direction, thereby making the stroke simulator 5 inactive in reaction to the brake operation performed by the driver. As a result, the brake fluid is efficiently supplied from the master cylinder 3 toward the wheel cylinders 8. Therefore, the wheel cylinder pressures that the driver generates with the pressing force F can be prevented from reducing. More specifically, the pressing force brake portion 102 deactivates all of the actuators in the hydraulic unit 6. The SS/V IN 23 may be activated in the valve-opening direction.

Next, the stroke dimensions of both the pistons 32P and 32S of the master cylinder 3 will be described. Assume that Vss represents the maximum fluid amount that the stroke simulator 5 can absorb, i.e., the amount of brake fluid that the positive-pressure chamber 511 can absorb. Assume that Vf represents each of the amounts of brake fluid required to be supplied from the primary hydraulic chamber 31P to the wheel cylinders 8a and 8d of the P system and from the secondary hydraulic chamber 31S to the wheel cylinders 8b and 8c of the S system, respectively, to generate the target wheel cylinder pressure Pw*, assuming that Pw* represents the target wheel cylinder pressure of the brake by the pressing force F. In this case, the primary hydraulic chamber 31P to which the stroke simulator 5 is connected has a volume corresponding to the sum of Vss and Vf. On the other hand, the secondary hydraulic pressure 31S out of communication with the stroke simulator 5 has a volume corresponding to Vf. Therefore, in the first embodiment, a maximum stroke amount Lp of the primary piston 32P is larger than a maximum stroke amount Ls of the secondary piston 32S. The detailed settings of the respective dimensions can be referred to Japanese Patent Application Public Disclosure No. 2016-150633, and will not be elaborated herein.

The fail-safe portion 103 detects the occurrence of a failure in the brake control apparatus 1 (a brake fluid leak abnormality or a defective pressure increase abnormality, an abnormality in the hydraulic sensors, and an abnormality in the actuators such as an abnormality in the motor, an abnormality in the pump, and an abnormality in the valves). For example, the fail-safe portion 103 detects the brake fluid leak abnormality, the defective pressure increase abnormality, the abnormality in the hydraulic sensors, and the abnormality in the actuators (the pump 7, the motor 7a, the pressure adjustment valve 27, and the like) in the hydraulic unit 6 based on a signal from the brake operation state detection portion 101a and a signal from each of the sensors. Alternatively, the fail-safe portion 103 detects a failure (an abnormality) in an in-vehicle electric power source (a battery) supplying electric power source to the brake control apparatus 1, or the ECU 100. When detecting the occurrence of the failure (the abnormality such as the brake fluid leak and the defective pressure increase) or the failure (the abnormality) in the in-vehicle electric power source (the battery) or the ECU 100 during the by-wire control, the fail-safe portion 103 switches the control according to the state of the failure (the abnormality).

For example, when the pressure control based on the by-wire control is determined to be unable to continue, the fail-safe portion 103 actuates the pressing force brake portion 102, thereby switching the control from the by-wire control to the pressing force control. More specifically, the fail-safe portion 103 deactivates all of the actuators in the hydraulic unit 6, thereby causing the braking to transition to the pressing force brake. The shut-off valves 21 are the constantly-opened valves. This allows the shut-off valves 21 to be kept opened, thereby being able to automatically realize the pressing force brake, when the failure has occurred in the electric power source. The SS/V OUT 24 is the normally-closed valve. This allows the SS/V OUT 24 to be kept closed, thereby automatically deactivating the stroke simulator 5, when the failure has occurred in the electric power source. The communication valves 26 are the normally-closed valves. This allows the two brake hydraulic systems to operate independently of each other, thereby allowing each of the systems to increase the wheel cylinder pressures according to the pressing force F separately from each other, when the failure has occurred in the electric power source. The electric power source operation portion 10x has a self-holding function of autonomously shutting down the electric power source after performing required processing without immediately shutting down the electric power source of the ECU 100 when the ignition of the vehicle is switched from ON to OFF, and a wakeup function of turning on the electric power source according to a different signal from the signal indicating that the ignition is switched from OFF to ON, such as a signal indicating that the door is opened/closed.

The brake control apparatus 1 is formed by the first fluid passage (the first connection fluid passage) 11P, the first fluid passage (the second connection fluid passage) 11S, the first shut-off valve 21P, the second shut-off valve 21S, the discharge fluid passages (the communication passage) 16P and 16S, the pump 7, the motor 7a, the first communication valve 26P, the second communication valve 26S, the pressure adjustment valve 27, and the ECU 100.

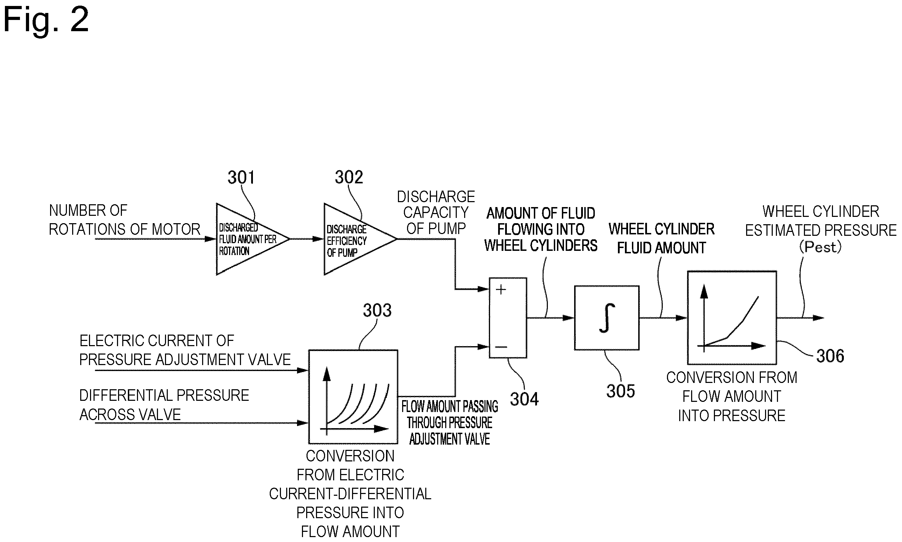

Fig. 2 is a block diagram illustrating a calculation of a first hydraulic pressure according to the first embodiment.

First, the brake control apparatus 1 calculates the amount of fluid discharged from the pump 7 per unit time based on the number of rotations of the motor 7a, which is detected by the rotation number detector 7b. More specifically, the brake control apparatus 1 calculates the discharge capacity of the pump 7 per unit time by multiplying the detected number of rotations of the motor 7a by the discharged fluid amount per rotation at a block 301, and further multiplying it by the discharge efficiency of the pump 7 at a block 302.

The discharge capacity of the pump 7 may be calculated by detecting the rotational position of the motor 7a and determining the number of times that the plunger pump discharges the fluid.

Next, at a block 303, the brake control apparatus 1 calculates the flow amount passing through the pressure adjustment valve 27 based on the relationship between the control electric current of the pressure adjustment valve 27 and the differential pressure between the upstream side and the downstream side of the pressure adjustment valve 27 (the graph indicated in the block 303).

At a block 304, the brake control apparatus 1 calculates the difference between the calculated discharge capacity of the pump 7 per unit time and the flow amount passing through the pressure adjustment valve 27. In other words, this difference corresponds to the flow amount flowing into the wheel cylinders 8 (8a to 8d).

At a block 305, the brake control apparatus 1 calculates the fluid amount in the wheel cylinders 8 (8a to 8d) by integrating the fluid amount flowing into the wheel cylinders 8 (8a to 8d), which is the difference between the calculated amount of fluid discharged from the pump 7 per unit time and the flow amount passing through the pressure adjustment valve 27.

At a block 306, the brake control apparatus 1 calculates an estimated hydraulic pressure Pest as the first hydraulic pressure in the wheel cylinders 8 (8a to 8d) based on the relationship between the fluid amount and the pressure in the wheel cylinders 8 (8a to 8d) (the graph indicated in the block 306) .

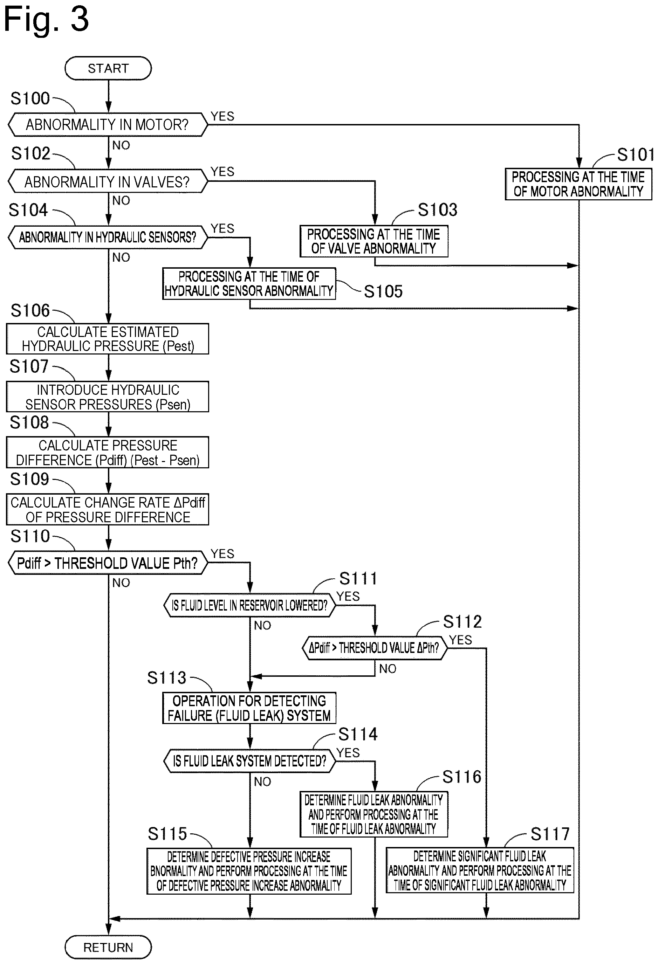

Fig. 3 is a flowchart illustrating an operation for detecting a brake fluid leak according to the first embodiment. This flowchart is repeatedly performed per predetermined calculation cycle.

In step S100, the brake control apparatus 1 determines whether an abnormality has occurred in the motor 7a. If an abnormality has occurred in the motor 7a, the processing proceeds to step S101, in which the brake control apparatus 1 performs processing that should be performed at the time of the motor abnormality and the processing returns to step S100. If no abnormality has occurred in the motor 7a, the processing proceeds to step S102.

In step 102, the brake control apparatus 1 determines whether an abnormality has occurred in the valves (the electromagnetic valves 26 and the like). If an abnormality has occurred in the valves (the electromagnetic valves 26 and the like), the processing proceeds to step S103, in which the brake control apparatus 1 performs processing that should be performed at the time of the valve abnormality and the processing returns to step S100. If no abnormality has occurred in the valves (the electromagnetic valves 26 and the like), the processing proceeds to step S104.

In step S104, the brake control apparatus 1 determines whether an abnormality has occurred in the hydraulic sensors (91 and 92). If an abnormality has occurred in the hydraulic sensors (91 and 92), the processing proceeds to step S105, in which the brake control apparatus 1 performs processing that should be performed at the time of the hydraulic sensor abnormality and the processing returns to step S100. If no abnormality has occurred in the hydraulic sensors (91 and 92), the processing proceeds to step S106.

In step S106, the brake control apparatus 1 calculates the estimated hydraulic pressure Pest as the first hydraulic pressure by the calculation method described with reference to Fig. 2. Then, the processing proceeds to step S107.

In step S107, the brake control apparatus 1 introduces sensor pressures Psen as a second hydraulic pressure in the P system and the S system by the first and second hydraulic sensors 92P and 92S. Then, the processing proceeds to step S108.

In step S108, the brake control apparatus 1 calculates a pressure difference Pdiff between the estimated hydraulic pressure Pest and the sensor pressures Psen. Then, the processing proceeds to step S109.

In step S109, the brake control apparatus 1 calculates a change rate ΔPdiff of the pressure difference Pdiff. Then, the processing proceeds to step S110.

In step S110, the brake control apparatus 1 determines whether the calculated pressure difference Pdiff is greater than a threshold value Pth as a predetermined pressure. If the calculated pressure difference Pdiff is greater than the threshold value Pth, the brake control apparatus 1 determines that there is a possibility of a failure (the brake fluid leak abnormality or the defective pressure increase abnormality), and the processing proceeds to step Sill. If the calculated pressure difference Pdiff is not greater than the threshold value Pth, the brake control apparatus 1 determines that the brake control apparatus 1 is normal, and the processing returns to step S100.

In step Sill, the brake control apparatus 1 determines whether the fluid level of the reservoir 4 is lowered. If the fluid level of the reservoir 4 is lowered, the processing proceeds to step S112. If the fluid level of the reservoir 4 is not lowered, the processing proceeds to step S113.

In step S113, the brake control apparatus 1 performs an operation for detecting the failure (fluid leak) system. Then, the processing proceeds to step S114.

Now, the operation for detecting the failure (fluid leak) system may be an operation of actuating the pump 7 and alternately actuating the first communication valve 26P and the second communication valve 26S to open/close then a plurality of times, and, after that, detecting the fluid leak based on the differential pressure between the respective sensor pressures Psen detected by the first and second hydraulic sensors 92P and 92S of both the P and S systems (for more details, refer to Japanese Patent Application Public Disclosure No. 2014-151806), or may be an operation of actuating the pump 7 and increasing the hydraulic pressures in both the P and S systems to predetermined hydraulic pressures, and then detecting the fluid leak system based on the differential pressure between the respective sensor pressures Psen detected by the first and second hydraulic sensors 92P and 92S of both the P and S systems after closing the first communication valve 26P and the second communication valve 26S (Japanese Patent Application Public Disclosure No. 2015-182631).

Performing the detection operation in this manner allows the fluid leak to be determined only by causing the pressure to increase in each of the systems alternately or causing the pressure to be maintained in each of the systems, and checking the differential pressure between the two systems.

In step S114, the brake control apparatus 1 determines whether the failure (fluid leak) system is detected. If the failure (fluid leak) system is detected, the processing proceeds to step S116. If the failure (fluid leak) system is not detected, the processing proceeds to step S115.

In step S115, the brake control apparatus 1 determines the defective pressure increase abnormality, and performs processing that should be performed at the time of the defective pressure increase abnormality. Then, the processing returns to step S100.

In step S112, the brake control apparatus 1 determines whether the change rate ΔPdiff of the pressure difference Pdiff is higher than a threshold value ΔPth serving as a predetermined change rate. If the change rate ΔPdiff of the pressure difference Pdiff is higher than the threshold value ΔPth, the processing proceeds to step S117. If the change rate Δ of the pressure difference Pdiff is not higher than the threshold value ΔPth, the processing proceeds to step S113.

In step S116, the brake control apparatus 1 determines the fluid leak abnormality (including an internal fluid leak), and performs processing that should be performed at the time of the fluid leak abnormality. Then, the processing returns to step S100.

Now, the processing that should be performed at the time of the fluid leak abnormality is assumed to be single-system boosting control of, for example, supposing that the failure has occurred in the S system, actuating the first communication valve 26P in the valve-opening direction and also actuating the second communication valve 26S in the valve-closing direction, thereby shutting down the S system in which the failure has occurred and performing the by-wire control using only the normal P system.

In step S117, the brake control apparatus 1 determines a significant fluid leak abnormality, and also performs processing that should be performed at the time of the significant fluid leak abnormality. Then, the processing returns to step S100.

Now, the processing that should be performed at the time of the significant fluid leak abnormality is assumed to be two-system pressing force control of stopping the pressure increase control using the pump 7 and directly transmitting the master cylinder pressures Pm generated by the driver's brake operation to the wheel cylinders 8. Therefore, the brake control apparatus 1 actuates the first shut-off valve 21P and the second shut-off valve 21S in the valve-opening directions and also actuates the first communication valve 26P and the second communication valve 26S in the valve-closing directions, and stops controlling the pressure adjustment valve 27 and stops driving the motor 7a.

In other words, the processing that should be performed at the time of the significant fluid leak abnormality is assumed to be two-system pressing force control of directly transmitting the master cylinder pressures Pm generated by the driver's brake operation to the wheel cylinders 8.

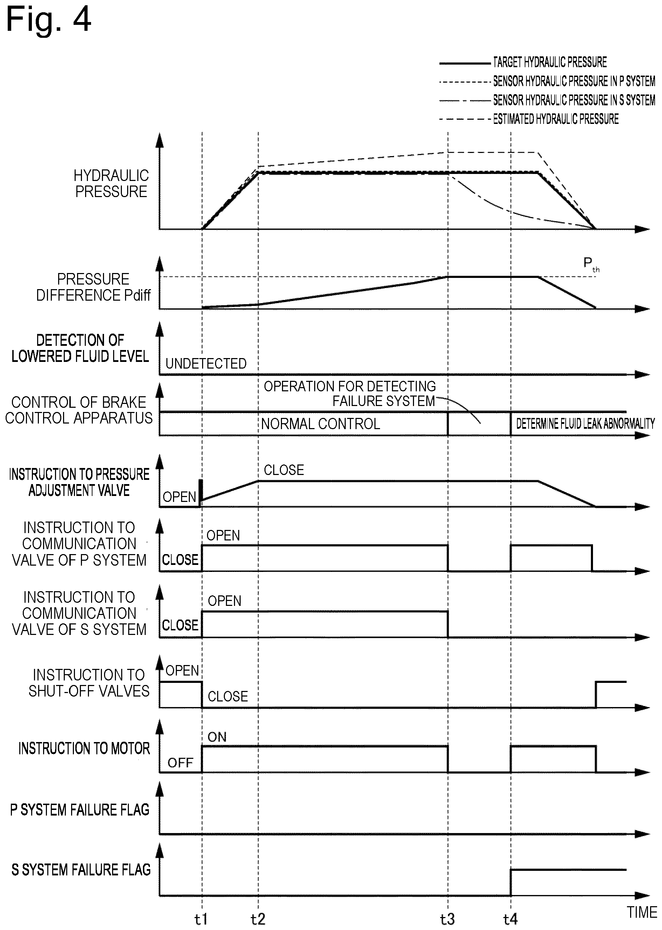

Fig. 4 is a timing chart when performing the operation for detecting the brake fluid leak at the time of the fluid leak in the S system according to the first embodiment. The present timing chart indicates a state in which no failure (abnormality) has occurred in the motor 7a, the valves (the electromagnetic valves 26 and the like), and the hydraulic sensors (91 and 92), and the fluid level in the reservoir 4 is not lowered.

The horizontal axis represents time. Then, the top graph indicates a change in the state of the hydraulic pressure, and the graphs below it indicate changes in the states of the pressure difference Pdiff, the detection of the lowered fluid level in the reservoir 4, the control of the brake control apparatus 1, the instruction directed to the pressure adjustment valve 27, the instruction directed to the first communication valve 26P in the P system, the instruction directed to the second communication valve 26S in the S system, the instruction directed to the shut-off valves 21, the instruction directed to the motor 7a, a P system failure flag, and an S system failure flag, respectively.

At time t1, the driver starts the brake operation. At this time, the brake control apparatus 1 increases the calculated target hydraulic pressure (the solid line), and starts increasing the pressures by the by-wire control using the P system and the S system.

From time t2, the target hydraulic pressure is kept constant. The sensor pressures Psen detected by the first and second hydraulic sensors 92P and 92S are controlled according to the target hydraulic pressure in both the P system and the S system until time t2. However, the pressure difference Pdiff starts to be generated between the estimated hydraulic pressure Pest calculated from the number of rotations of the motor 7a, which is detected by the rotation number detector 7b, and the sensor pressures Psen detected by the first and second hydraulic sensors 92P and 92S due to the influence of the fluid leak that has occurred in the S system. The pressure difference Pdiff between the estimated hydraulic pressure Pest and the sensor pressures Psen gradually increases from time t2 to time t3. Then, at time t3, the pressure difference Pdiff exceeds the threshold value Pth, which triggers a start of the operation for detecting the failure (fluid leak) system. More specifically, the brake control apparatus 1 closes the first communication valve 26P and the second communication valve 26S, thereby confining the hydraulic pressures in both the systems.

At time t4, the sensor pressure Psen detected by the second hydraulic sensor 92S reduces by a predetermined value or more due to the fluid leak, and therefore the brake control apparatus 1 sets the S-system failure flag and ends the operation for detecting the failure (fluid leak) system.

As a result, the brake control apparatus 1 determines the fluid leak abnormality as the failure (the abnormality) since the fluid leak in the S system is detected. After that, as the processing that should be performed at the time of the fluid leak abnormality, the brake control apparatus 1 performs the single-system boosting control of actuating the first communication valve 26P in the valve-opening direction and also actuating the second communication valve 26S in the valve-closing direction, thereby shutting down the S system in which the failure has occurred and performing the by-wire control using only the normal P system.

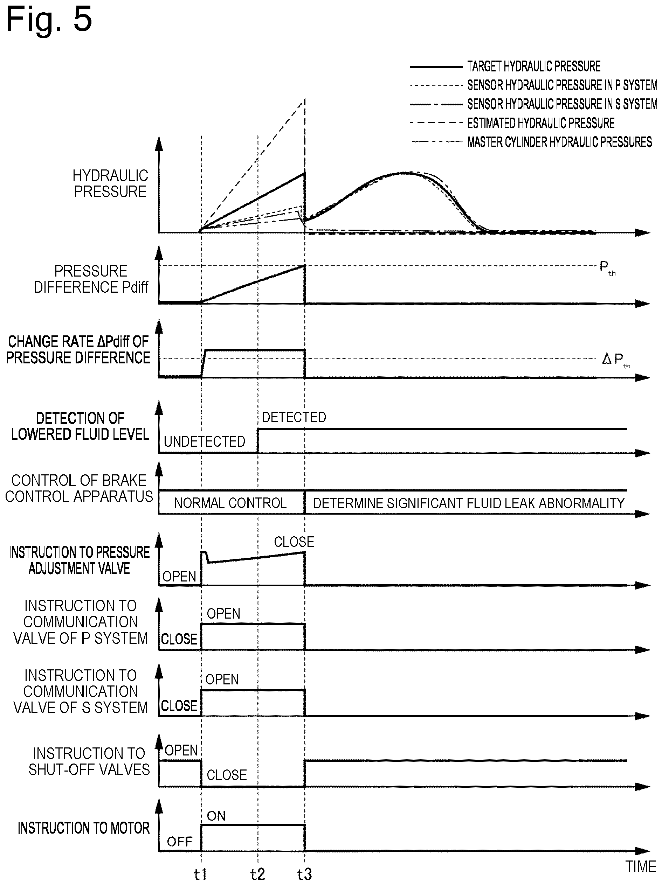

Fig. 5 is a timing chart when performing the operation for detecting the brake fluid leak at the time of the significant outward fluid leak in the S system according to the first embodiment. The present flowchart indicates a state in which no failure (abnormality) has occurred in the motor 7a, the valves (the electromagnetic valves 26 and the like), and the hydraulic sensors (91 and 92).

The horizontal axis represents time. Then, the top graph indicates a change in the state of the hydraulic pressure, and the graphs below it indicate changes in the states of the pressure difference Pdiff, the change rate ΔPdiff of the pressure difference, the detection of the lowered fluid level in the reservoir 4, the control of the brake control apparatus 1, the instruction directed to the pressure adjustment valve 27, the instruction directed to the first communication valve 26P in the P system, the instruction directed to the second communication valve 26S in the S system, the instruction directed to the shut-off valves 21, and the instruction directed to the motor 7a, respectively.

At time t1, the driver starts the brake operation. At this time, the brake control apparatus 1 increases the calculated target hydraulic pressure, and starts increasing the pressures by the by-wire control using the P system and the S system.

However, after time t1, the fluid leak is significant, and therefore the brake control apparatus 1 cannot increase the sensor pressures Psen in both the systems detected by the first and second hydraulic sensors 92P and 92S according to the target hydraulic pressure. In other words, the outward brake fluid leak continues while the pressure increase is attempted.

Therefore, the brake control apparatus 1 controls the pressure adjustment valve 27 and the motor 7a so as to supply the brake fluid to the wheel cylinders 8 by a larger amount than that under the normal situation in such a manner that the sensor pressures Psen are adjusted closer to the target hydraulic pressure. As a result, the estimated hydraulic pressure increases at a higher gradient than the gradient at which the target hydraulic pressure increases, and therefore the pressure difference Pdiff changes at a higher rate.

At time t2, as a result of the continuous significant fluid leak of the brake fluid, the brake fluid in the reservoir 4 reduces and the fluid level sensor 94 detects that the fluid level is lowered.

Further, at time t3, the pressure difference Pdiff exceeds the threshold value Pth. At this time, the brake control apparatus 1 determines the significant fluid leak abnormality since the fluid level in the reservoir 4 is lowered and the change rate Δ of the pressure difference Pdiff is higher than the threshold value ΔPt.

After that, as the processing that should be performed at the time of the significant fluid leak abnormality, the brake control apparatus 1 performs the two-system pressing force control of stopping the pressure increase control using the pump 7 and directly transmitting the master cylinder pressures Pm generated by the driver's brake operation to the wheel cylinders 8. Therefore, the brake control apparatus 1 actuates the first shut-off valve 21P and the second shut-off valve 21S in the valve-opening directions and also actuates the first communication valve 26P and the second communication valve 26S in the valve-closing directions, and stops controlling the pressure adjustment valve 27 and stops driving the motor 7a.

As a result, the P system and the S system are isolated from each other, and the master cylinder pressures Pm based on the driver's pressing force are directly transmitted to the wheel cylinders 8. Since the significant fluid leak has occurred in the S system, the pressures in the second wheel cylinders 8b and 8c reduce closer to zero, but the pressures in the first wheel cylinders 8a and 8d in the P system match the pressure in the master cylinder.

In this manner, the brake control apparatus 1 can transition to a state that it can ensure the generation of the braking force on the vehicle even when the significant brake fluid leak has occurred.

The first embodiment brings about the following advantageous effects. (1) The brake control apparatus 1 detects the possibility of the failure (the abnormality) by comparing the pressure difference Pdiff between the estimated hydraulic pressure Pest in the first fluid passages (the connection fluid passage) 11 (11P and 11S) determined based on the number of rotations of the motor 7a, which is detected by the rotation number detector 7b, and the sensor pressures Psen detected by the first and second hydraulic sensors 92P and 92S with the threshold value Pth.

Therefore, the brake control apparatus 1 can detect the failure (the abnormality) such as the fluid leak with improved accuracy. Further, the brake control apparatus 1 can detect the fluid leak regardless of whether the fluid level in the reservoir 4 is lowered. In other words, the brake control apparatus 1 can detect even an internal leak. Further, the brake control apparatus 1 does not require a special detection operation, and therefore does not make the driver feel uncomfortable.

(2) The brake control apparatus 1 calculates the fluid amount in the wheel cylinders 8 (8a to 8d) to calculate the estimated hydraulic pressure Pest in the wheel cylinders 8 (8a to 8d) by integrating the fluid amount flowing into the wheel cylinders 8 (8a to 8d), which is the difference between the discharge capacity of the pump 7 per unit time and the flow amount passing through the pressure adjustment valve 27.

Therefore, the brake apparatus 1 can detect the failure (the abnormality) with improved accuracy.

(3) The possibility of the failure (the abnormality) is the abnormality of the fluid leak of the brake fluid.

Therefore, the brake control apparatus 1 can detect the failure (the abnormality) such as the fluid leak with improved accuracy.

(4) The brake control apparatus 1 detects the possibility of the failure (the abnormality) when the pressure difference Pdiff, which is the pressure difference between the estimated hydraulic pressure Pest in the first fluid passages (the connection fluid passage) 11 (11P and 11S) determined based on the number of rotations of the motor 7a and the sensor pressures Psen detected by the first and second hydraulic sensors 92P and 92S, is greater than the threshold value Pth, and further, performs the operation for detecting the failure (fluid leak) system when the fluid level in the reservoir 4 is higher than the predetermined fluid level.

Therefore, the brake control apparatus 1 can distinguish whether the failure (the abnormality) is the fluid leak abnormality (including the internal leak) or the defective pressure increase abnormality regardless of whether the fluid level in the reservoir 4 is lowered.

Further, if a failure has occurred in one of the systems, the brake control apparatus 1 can transition to the single-system boosting control of shutting down the system in which the failure has occurred and performing the by-wire control using only the normal other system.

(5) When detecting the possibility of the failure (the abnormality), the brake control apparatus 1 detects that the significant brake fluid leak has occurred if the fluid level in the reservoir 4 is lower than the predetermined fluid level and the change rate ΔPdiff of the pressure difference Pdiff, which is the pressure difference between the estimated hydraulic pressure Pest of the systems in the first fluid passages (the connection fluid passage) 11 (11P and 11S) determined based on the number of rotations of the motor 7a and the sensor pressures Psen detected by the first and second hydraulic sensors 92P and 92S, is greater than the threshold value ΔPth serving as the predetermined change rate.

Therefore, if there is the possibility of the significant fluid leak abnormality according to the fluid level in the reservoir 4, the brake control apparatus 1 can immediately transition to the safe state (the two-system pressing force control of directly transmitting the master cylinder pressures Pm generated by the driver's brake operation to the wheel cylinders 8) as the processing for the significant fluid leak abnormality.

(6) The brake control apparatus 1 is configured to drive the pump 7 and alternately drive the first communication valve 26P and the second communication valve 26S to open/close them the plurality of times, and, after that, detect the fluid leak according to the differential pressure between the respective sensor pressures Psen detected by the first and second hydraulic sensors 92P and 92S as the operation for detecting the failure (fluid leak) system.

Therefore, the brake control apparatus 1 can easily detect the fluid leak by alternately increasing the pressures in both the systems and checking the differential pressure therebetween.

(7) The brake control apparatus 1 is configured to detect the fluid leak by driving the pump 7, and then actuating the first communication valve 26P and the second communication valve 26S in the valve-closing directions and comparing the sensor pressures Psen in the respective systems that are detected by the first and second hydraulic sensors 92P and 92S after that, as the operation for detecting the failure (fluid leak) system.

Therefore, the brake control apparatus 1 can easily detect the fluid leak by maintaining the pressures in both the systems and checking the differential pressure therebetween.

### [Second Embodiment]

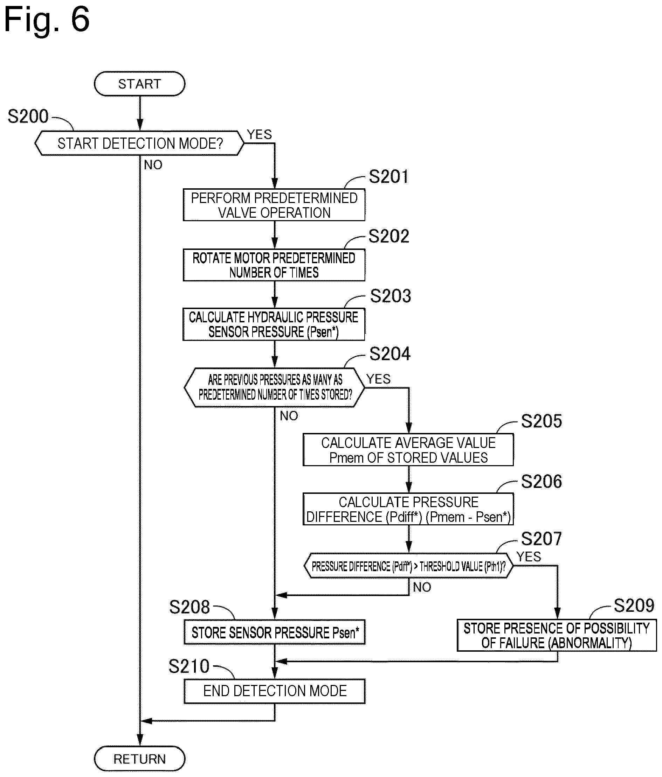

Fig. 6 is a flowchart illustrating an operation for detecting the brake fluid leak according to a second embodiment. This flowchart is repeatedly performed per predetermined calculation cycle.

In the second embodiment, the brake control apparatus 1 performs control of detecting that there is the possibility of the failure (the abnormality) based on the fact that a difference is generated as a result of comparing the pressure generated from the pump rotation using the rotation number detector with a previous value stored when the brake control apparatus 1 has been normal (a detection mode).

In step S200, the brake control apparatus 1 confirms the vehicle state and whether the brake control apparatus 1 is operable, and determines whether to start the detection mode. If the detection mode can be started, the processing proceeds to step S201. If the detection mode cannot be started, the processing returns to step S200.

As the condition for starting actuating the detection mode, the detection mode is performed after the electric power source is maintained by the self-holding by the electric power source operation portion 10x when the driver switches off the ignition (IGN) of the vehicle in a safe state, or the detection mode is performed before the IGN is switched on after the vehicle wakes up. These cases allow the brake control apparatus 1 to perform the detection mode without interfering with the driver's brake operation.

In step S201, the brake control apparatus 1 performs the predetermined operation of the valves (the electromagnetic valves 26 and the like) to increase the pressures.

More specifically, the brake control apparatus 1 performs control of actuating the first shut-off valve 21P and the second shut-off valve 21S in the valve-closing directions and the first communication valve 26P and the second communication valve 26S in the valve-opening directions, and also applying a predetermined amount to the pressure adjustment valve 27 so as to allow it to maintain the completely closed state against the generated pressure.

By this control, the brake control apparatus 1 can increase the pressures while avoiding the influence of a variation in the passing flow amount among products.

In step S202, the brake control apparatus 1 rotates the motor 7a as many times as a target number of rotations, which is a stored fixed value, with use of the rotation number detector 7b. For example, the brake control apparatus 1 rotates the motor 7a five times or ten times. The brake control apparatus 1 can avoid the influence of an error in the number of times of discharge by setting this target number of rotations based on the number of times of discharge of the plunger pump from the rotational angle and the position of the motor.

The brake control apparatus 1 increases the pressures in the wheel cylinders 8 in the P system and the S system by these operations of the valves (the electromagnetic valves 26 and the like) and operation of the motor 7a.

In step S203, the brake control apparatus 1 detects the respective sensor pressures Psen by the first and second hydraulic sensors 92P and 92S immediately after rotating the motor 7a as many times as the target number of rotations, and calculates a system pressure sensor value Psen*.

The average value of the respective sensor pressures Psen or the sensor pressure Psen of one of them may be used as this system pressure sensor value Psen*. In step S204, the brake control apparatus 1 determines whether the system pressure sensor values Psen* in the previous detection mode as many as a predetermined number of times are stored. If the system pressure sensor values Psen* as many as the predetermined number of times are not stored, the processing proceeds to step S208. If the system pressure sensor values Psen* as many as the predetermined number of times are stored, the processing proceeds to step S205.

In step S208, the brake control apparatus 1 stores the present system pressure sensor value Psen*. Then, the processing proceeds to step S210.

In step S210, the brake control apparatus 1 ends the detection mode. Then, the processing returns to step S200.

In step S205, the brake control apparatus 1 calculates an average value Pmem (the first hydraulic pressure) of the previously stored system pressure sensor values Psen* as many as the predetermined number of times. Then, the processing proceeds to step S206.

In step S206, the brake control apparatus 1 calculates the pressure difference Pdiff* between the average value Pmem (the first hydraulic pressure) and the present system pressure sensor value Psen* (the second hydraulic pressure). Then, the processing proceeds to step S207.

In step S207, the brake control apparatus 1 compares the pressure difference Pdiff* and a threshold value Pth1. If the pressure difference Pdiff* is not greater than the threshold value Pth1, this means that the brake control apparatus 1 is normal, and therefore the processing proceeds to step S208. If the pressure difference Pdiff* is greater than the threshold value Pth1, the brake control apparatus 1 determines that there is the possibility of the failure (the brake fluid leak abnormality or the defective pressure increase abnormality). Then, the processing proceeds to step S209.

In step S209, the brake control apparatus 1 stores "there is the possibility of the failure (the brake fluid leak abnormality or the defective pressure increase abnormality)". Then, the processing proceeds to step S210.

After that, the stored information "there is the possibility of the failure (the brake fluid leak abnormality or the defective pressure increase abnormality)" causes the brake control apparatus 1 to notify the driver that "there is the possibility of the failure (the abnormality)" when the IGN is switched on, or causes the brake control apparatus 1 to perform similar processing to the first embodiment at the time of the first driver's brake operation to thus identify the failure (the abnormality) and perform the processing that should be performed at the time of the abnormality.

The brake control apparatus 1 can be less affected by the variability among products and the individual variability among the valves (the electromagnetic valves 26 and the like) and detect the failure (the abnormality) due to the fluid leak with improved accuracy, by performing the predetermined pressure increase operation pattern and storing the history thereof every time a predetermined period has passed, and using this history as a reference.

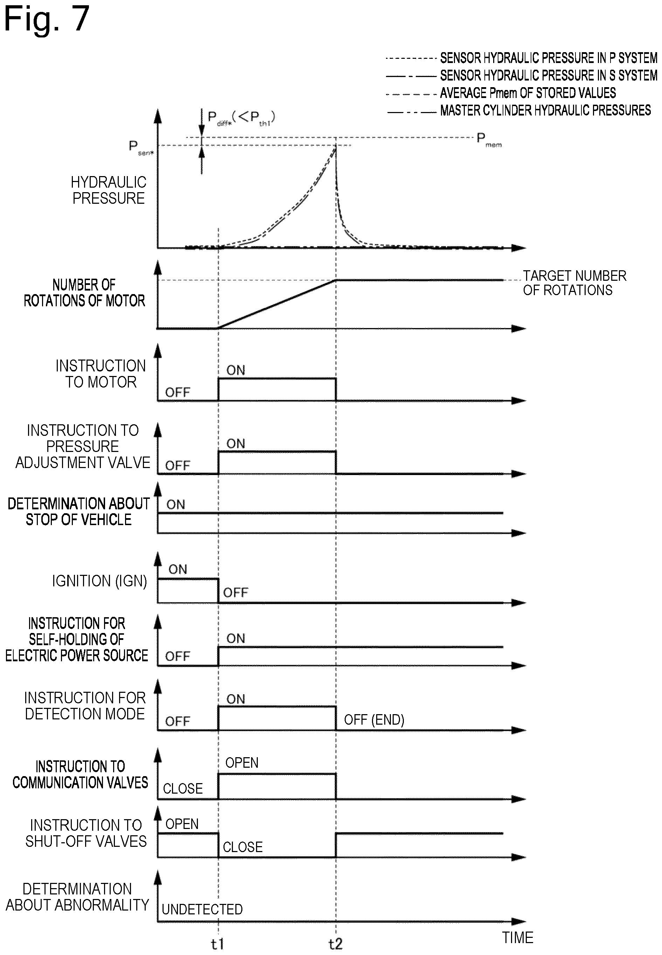

Fig. 7 is a timing chart when performing the detection mode without the fluid leak occurring according to the second embodiment.

The horizontal axis represents time. Then, the top graph indicates a change in the state of the hydraulic pressure, and the graphs below it indicate changes in the states of the number of rotations of the motor 7a, the instruction directed to the motor 7a, the instruction directed to the pressure adjustment valve 27, a determination about whether the vehicle is stopped, ON/OFF of the IGN, the instruction for the self-holding of the electric power source, the instruction for the detection mode, the instruction directed to the first communication valve 26P and the second communication valve 26S, the instruction directed to the shut-off valves 21, and a determination about the abnormality, respectively.

At time t1, because the vehicle is in a stopped state and the IGN is in an OFF state, the brake control apparatus 1 starts the self-holding of the electric power source of the ECU 100 and also starts the detection mode.

Because attempting to increase the pressures, the brake control apparatus 1 actuates the first shut-off valve 21P and the second shut-off valve 21S in the valve-closing directions and actuates the first communication valve 26P and the second communication valve 26S in the valve-opening directions. The brake control apparatus 1 performs control of applying the predetermined amount to the pressure adjustment valve 27 so as to allow it to maintain the completely closed state against the generated pressure.

Further, the brake control apparatus 1 controls the motor 7a to start rotating until reaching the target number of rotations, thereby causing the pump 7 to also rotate and starting increasing the pressures.

At time t2, because the number of rotations of the motor 7a reaches the target number of rotations, the brake control apparatus 1 stops rotating the motor 7a.

At this time, the brake control apparatus 1 detects the respective sensor pressures Psen by the first and second hydraulic sensors 92P and 92S, and calculates the system pressure sensor value Psen*.

Next, the brake control apparatus 1 calculates the pressure difference Pdiff* between the average value Pmem of the previously stored system pressure sensor values Psen* as many as the predetermined number of times and the calculated system pressure sensor value Psen*, compares the pressure difference Pdiff* with the threshold value Pth1, determines that the brake control apparatus 1 is normal because the pressure difference Pdiff* is not greater than the threshold value Pth1, and ends the detection mode.

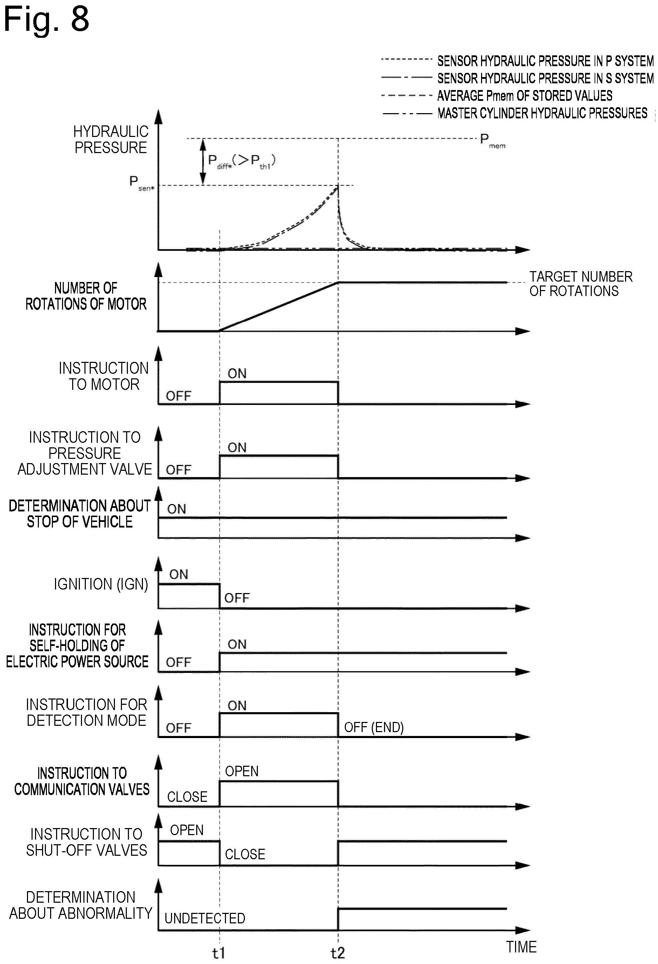

Fig. 8 is a timing chart when performing the detection mode with the fluid leak occurring according to the second embodiment.

The horizontal axis represents time. Then, the top graph indicates a change in the state of the hydraulic pressure, and the graphs below it indicate changes in the states of the number of rotations of the motor 7a, the instruction directed to the motor 7a, the instruction directed to the pressure adjustment valve 27, the determination about whether the vehicle is stopped, ON/OFF of the IGN, the instruction for the self-holding of the electric power source, the instruction for the detection mode, the instruction directed to the first communication valve 26P and the second communication valve 26S, the instruction directed to the shut-off valves 21, and the determination about the abnormality, respectively.

At time t1, because the vehicle is in a stopped state and the IGN is in an OFF state, the brake control apparatus 1 causes the electric power source operation portion 10x of the ECU 100 to start the self-holding of the electric power source, and also starts the detection mode.

Because attempting to increase the pressures, the brake control apparatus 1 actuates the first shut-off valve 21P and the second shut-off valve 21S in the valve-closing directions and actuates the first communication valve 26P and the second communication valve 26S in the valve-opening directions. The brake control apparatus 1 performs control of applying the predetermined amount to the pressure adjustment valve 27 so as to allow it to maintain the completely closed state against the generated pressure.

Further, the brake control apparatus 1 controls the motor 7a to start rotating until reaching the target number of rotations, thereby causing the pump 7 to also rotate and starting increasing the pressures.

At time t2, because the number of rotations of the motor 7a reaches the target number of rotations, the brake control apparatus 1 stops rotating the motor 7a.

At this time, the brake control apparatus 1 detects the respective sensor pressures Psen by the first and second hydraulic sensors 92P and 92S, and calculates the system pressure sensor value Psen*.

Next, the brake control apparatus 1 calculates the pressure difference Pdiff* between the average value Pmem of the previously stored system pressure sensor values Psen* as many as the predetermined number of times and the calculated system pressure sensor value Psen*, compares the pressure difference Pdiff* with the threshold value Pth1, determines that there is the possibility of the failure (the abnormality) because the pressure difference Pdiff* is greater than the threshold value Pth1, stores "there is the possibility of the failure (the abnormality)", and ends the detection mode.

After that, the stored information "there is the possibility of the failure (the brake fluid leak abnormality or the defective pressure increase abnormality)" causes the brake control apparatus 1 to notify the driver that "there is the possibility of the failure (the abnormality)" when the IGN is switched on, or causes the brake control apparatus 1 to perform similar processing to the first embodiment at the time of the first driver's brake operation to thus identify the failure (the abnormality) and perform the processing that should be performed at the time of the abnormality.

The second embodiment brings about the following advantageous effects. (1) The brake control apparatus 1 detects the possibility of the failure (the abnormality) by performing the detection mode of detecting the respective sensor pressures Psen using the first and second hydraulic sensors 92P and 92S immediately after rotating the motor 7a until reaching the pre-stored target number of rotations, storing the calculated system pressure sensor values Psen* as many as the predetermined number of times, calculating the average value Pmem thereof, calculating the pressure difference Pdiff* between this average value Pmem and the system pressure sensor value Psen* calculated at the present time, and comparing this pressure difference Pdiff* and the threshold value Pth1.

Therefore, the brake control apparatus 1 can detect the failure (the abnormality) with improved accuracy. Further, due to the comparison with the previous values, the brake control apparatus 1 can be less affected by the variability among products and the individual variability among the valves (the electromagnetic valves 26 and the like) and detect the failure (the abnormality) with improved accuracy.

(2) As the condition for starting actuating the detection mode, the detection mode is performed with the electric power source maintained by the self-holding when the driver switches off the ignition (IGN) of the vehicle in the safe state, or is performed before the IGN is switched on after the vehicle wakes up.

Therefore, the brake control apparatus 1 performs the detection mode without the driver's performing the operation, thereby preventing the driver from feeling uncomfortable.

(3) The pre-stored target number of rotations is the fixed value (for example, five rotations or ten rotations).

Therefore, the brake control apparatus 1 can achieve the comparison with the previous values under similar conditions, and therefore can be less affected by the variability among products and the individual variability among the valves (the electromagnetic valves 26 and the like) and detect the failure (the abnormality) with improved accuracy.

(4) The information "there is the possibility of the failure (the abnormality)", which is stored during the detection mode performed when the IGN is switched off, causes the brake control apparatus 1 to notify the driver that "there is the possibility of the failure (the abnormality)" when the IGN is switched on, or causes the brake control apparatus 1 to perform similar processing to the first embodiment at the time of the next driver's brake operation to thus identify the failure (the abnormality) and perform the processing that should be performed at the time of the abnormality.

Therefore, the brake control apparatus 1 can prevent the vehicle from running while "there is the possibility of the failure (the abnormality)".

Further, even when the vehicle starts running, the brake control apparatus 1 can identify the "possibility of the failure (abnormality)" at the time of the first brake operation, thereby allowing the vehicle to transition to the safe state.

### [Other Embodiments]

Having described the embodiments for implementing the present invention, the specific configuration of the present invention is not limited to the configurations of the embodiments, and the present invention also includes even a design modification and the like thereof made within a range that does not depart from the scope of the present invention, as defined by the appended claims.

Further, the individual components described in the claims and the specification can be arbitrarily combined or omitted within a range that allows them to remain capable of achieving at least a part of the above-described objects or producing at least a part of the above-described advantageous effects.

For example, a hydraulic source constructed by combining a pressure accumulation device such as an accumulator with the pump 7 may be used as another hydraulic source (the second hydraulic source) different from the master cylinder 3.

The hydraulic unit may be an integrated unit integrally including the master cylinder 3, the hydraulic unit 6, and the stroke simulator 5, or may be a split unit in which any one of them is separated from the rest. Further, the hydraulic unit 6 may be a split unit.

The present application claims priority under the Paris Convention to Japanese Patent Application No. 2018-8581 filed on January 23, 2018.

### REFERENCE SIGNS LIST

- 1: brake control apparatus
- 2: brake pedal
- 3: master cylinder
- 4: reservoir tank
- 5: stroke simulator
- 6: hydraulic unit
- 7: pump
- 7a: motor
- 7b: rotation number detector (rotation number detection portion)
- 8: wheel cylinder
- 8a, 8d: wheel cylinder (first wheel cylinder)
- 8b, 8c: wheel cylinder (second wheel cylinder)
- 11: first fluid passage (connection fluid passage)
- 11P: first fluid passage (first connection fluid passage)
- 11S: first fluid passage (second connection fluid passage)
- 12: second fluid passage (simulator fluid passage)
- 16P, 16S: discharge fluid passage (communication fluid passage)
- 17: first pressure reduction fluid passage (return flow fluid passage)
- 21: shut-off valve
- 21P: shut-off valve (first shut-off valve)
- 21S: shut-off valve (second shut-off valve)
- 26: communication valve
- 26P: communication valve (first communication valve)
- 26S: communication valve (second communication valve)
- 27: pressure adjustment valve
- 31P: primary hydraulic chamber
- 31S: secondary hydraulic chamber (second chamber)
- 32P: primary piston
- 32S: secondary piston
- 92: hydraulic sensor
- 92P: hydraulic sensor (first hydraulic sensor)
- 92S: hydraulic sensor (second hydraulic sensor)
- 94: fluid level sensor
- 100: ECU (control unit)

## Claims

1. A brake apparatus,
comprising:
- a hydraulic unit (6);
- a control unit (100); and
- a wheel cylinder portion (8),
wherein the hydraulic unit (6) includes:
- at least one connection fluid passage (11) connected to the wheel cylinder portion (8),
- a pump (7) configured to be driven by a motor (7a) to discharge brake fluid to the connection fluid passage (11),
- a rotation number detection portion (7b) configured to detect a number of rotations of the motor (7a), and
- at least one hydraulic sensor (92) configured to detect a hydraulic pressure in the connection fluid passage (11), and
wherein the control unit (100) is configured to detect a possibility of a failure based on a first hydraulic pressure in the connection fluid passage (11) that is determined based on a number of rotations of the motor (7a) and a second hydraulic pressure detected by the hydraulic sensor (92).

2. The brake apparatus according to claim 1, wherein the control unit (100) is configured to detect the possibility of the failure related to a fluid level in a reservoir tank (4) storing the brake fluid therein when a difference between the first hydraulic pressure and the second hydraulic pressure is greater than a predetermined pressure.

3. The brake apparatus according to claim 2, wherein the control unit (100) is configured to determine that the failure is a fluid leak of the brake fluid when the fluid level is lower than a predetermined fluid level and a change rate of the difference between the first hydraulic pressure and the second hydraulic pressure is higher than a predetermined change rate.

4. The brake apparatus according to claim 2, wherein the control unit (100) is configured to output an instruction for detecting a fluid leak of the brake fluid to the hydraulic unit (6) when the fluid level is higher than a predetermined fluid level.

5. The brake apparatus according to claim 4, wherein:
- the wheel cylinder portion (8) includes a first wheel cylinder (8a, 8d) and a second wheel cylinder (8b, 8c),
- the connection fluid passage (11) includes a first connection fluid passage (11P) connected to the first wheel cylinder (8a, 8d) and a second connection fluid passage (11S) connected to the second wheel cylinder (8b, 8c),
- the hydraulic sensor (92) includes a first hydraulic sensor (92P) configured to detect a hydraulic pressure in the first connection fluid passage (11P) and a second hydraulic sensor (92S) configured to detect a hydraulic pressure in the second connection fluid passage (11S),
- the hydraulic unit (6) includes:
- a communication fluid passage (16P, 16S) connecting the first connection fluid passage (11P) and the second connection fluid passage (11S) to each other,
- a first communication valve (26P) disposed in the communication fluid passage (16P, 16S) and configured to prohibit a flow of the brake fluid heading from the communication fluid passage (16P, 16S) to the first connection fluid passage (11P), and
- a second communication valve (26S) disposed in the communication fluid passage (16P, 16S) and configured to prohibit a flow of the brake fluid heading from the communication fluid passage (16P, 16S) to the second connection fluid passage (11S),
- the pump (7) is disposed so as to discharge the brake fluid to a portion in the communication fluid passage (16P, 16S) that is located between the first communication valve (26P) and the second communication valve (26S), and
- the control unit (100) is configured to alternately drive the first communication valve (26P) and the second communication valve (26S) to open/close them a plurality of times while driving the pump (7), and, after that, to detect the occurrence of the fluid leak of the brake fluid based on values detected by the first hydraulic sensor (92P) and the second hydraulic sensor (92S).

6. The brake apparatus according to claim 4, wherein:
- the wheel cylinder portion (8) includes a first wheel cylinder (8a, 8d) and a second wheel cylinder (8b, 8c),
- the at least one connection fluid passage (11) includes a first connection fluid passage (11P) connected to the first wheel cylinder (8a, 8d) and a second connection fluid passage (11S) connected to the second wheel cylinder (8b, 8c),
- the at least one hydraulic sensor (92) includes a first hydraulic sensor (92P) configured to detect a hydraulic pressure in the first connection fluid passage (11P) and a second hydraulic sensor (92S) configured to detect a hydraulic pressure in the second connection fluid passage (11S),
- the hydraulic unit (6) includes:
- a communication fluid passage (16P, 16S) connecting the first connection fluid passage (11P) and the second connection fluid passage (11S) to each other,
- a first communication valve (26P) disposed in the communication fluid passage (16P, 16S) and configured to prohibit a flow of the brake fluid heading from the communication fluid passage (16P, 16S) to the first connection fluid passage (11P), and
- a second communication valve (26S) disposed in the communication fluid passage (16P, 16S) and configured to prohibit a flow of the brake fluid heading from the communication fluid passage (16P, 16S) to the second connection fluid passage (11S),
- the pump (7) is disposed so as to discharge the brake fluid to a portion in the communication fluid passage (16P, 16S) that is located between the first communication valve (26P) and the second communication valve (26S), and
- the control unit (100) is configured to drive the first communication valve (26P) and the second communication valve (26S) in valve-closing directions while driving the pump (7), and, after that, to detect the occurrence of the fluid leak of the brake fluid based on values detected by the first hydraulic sensor (92P) and the second hydraulic sensor (92S).

7. The brake apparatus according to claim 1, wherein the first hydraulic pressure is a hydraulic pressure in the connection fluid passage (11) that is determined based on an instantly measured number of rotations of the motor (7a), which is detected by the rotation number detection portion (7b).

8. The brake apparatus according to claim 1, wherein the first hydraulic pressure is a hydraulic pressure in the connection fluid passage (11) that is determined based on a pre-stored number of rotations of the motor (7a), which is detected by the rotation number detection portion (7b).

9. The brake apparatus according to claim 8, wherein the pre-stored number of rotations of the motor (7a) is a fixed value.

10. The brake apparatus according to claim 1, wherein:
- the wheel cylinder portion (8) includes a first wheel cylinder (8a, 8d) and a second wheel cylinder (8b, 8c),
- the connection fluid passage (11) includes a first connection fluid passage (11P) connected to the first wheel cylinder (8a, 8d) and a second connection fluid passage (11S) connected to the second wheel cylinder (8b, 8c),
- the hydraulic sensor (92) includes a first hydraulic sensor (92P) configured to detect a hydraulic pressure in the first connection fluid passage (11P) and a second hydraulic sensor (92S) configured to detect a hydraulic pressure in the second connection fluid passage (11S),
- the hydraulic unit (6) includes:
- a communication fluid passage (16P, 16S) connecting the first connection fluid passage (11P) and the second connection fluid passage (11S) to each other,
- a first communication valve (26P) disposed in the communication fluid passage (16P, 16S) and configured to prohibit a flow of the brake fluid heading from the communication fluid passage (16P, 16S) to the first connection fluid passage (11P),
- a second communication valve (26S) disposed in the communication fluid passage (16P, 16S) and configured to prohibit a flow of the brake fluid heading from the communication fluid passage (16P, 16S) to the second connection fluid passage (11S),
- a return flow fluid passage (17) connecting a portion in the communication fluid passage (16P, 16S) that is located between the first communication valve (26P) and the second communication valve (26S), and a reservoir tank (4) for storing the brake fluid therein, and
- a pressure adjustment valve (27) disposed in the return flow fluid passage (17),
- the pump (7) is disposed so as to discharge the brake fluid to a portion in the communication fluid passage (16P, 16S) that is located between the first communication valve (26P) and the second communication valve (26S), and
- the first hydraulic pressure is estimated based on a discharge capacity of the brake fluid discharged from the pump (7) and a passing fluid amount of the brake fluid that passes through the pressure adjustment valve (27).

11. The brake apparatus according to claim 1, wherein the failure is a fluid leak of the brake fluid.

12. A method for detecting a failure in a brake apparatus, comprising:
- detecting the number of rotations of a motor (7a) configured to drive a pump (7), the pump (7) being configured to discharge brake fluid to a connection fluid passage (11) connected to a wheel cylinder portion (8); and
- detecting a possibility of a failure based on a difference between a first hydraulic pressure in the connection fluid passage (11) that is determined based on the number of rotations of the motor (7a) and a second hydraulic pressure detected by a hydraulic sensor (92) configured to detect a hydraulic pressure in the connection fluid passage (11).

## Patentansprüche

1. Bremsvorrichtung,
umfassend:
- eine Hydraulikeinheit (6);
- eine Steuereinheit (100); und
- einen Radzylinderabschnitt (8),
wobei die Hydraulikeinheit (6) umfasst:
- mindestens einen Verbindungsfluidkanal (11), der mit dem Radzylinderabschnitt (8) verbunden ist,
- eine Pumpe (7), die zum Antreiben durch einen Motor (7a) konfiguriert ist, um Bremsflüssigkeit in den Verbindungsflüssigkeitskanal (11) abzugeben,
- einen Drehzahlerfassungsabschnitt (7b), der zum Erfassen einer Anzahl von Umdrehungen des Motors (7a) konfiguriert ist, und
- mindestens einen Hydrauliksensor (92), der zum Erfassen eines Hydraulikdrucks in dem Verbindungsfluidkanal (11) konfiguriert ist, und
wobei die Steuereinheit (100) konfiguriert ist, um eine Möglichkeit eines Ausfalls basierend auf einem ersten Hydraulikdruck in dem Verbindungsfluidkanal (11), der basierend auf einer Anzahl von Umdrehungen des Motors (7a) bestimmt ist, und einem zweiten Hydraulikdruck, der durch den Hydrauliksensor (92) erfasst ist, zu erfassen.

2. Bremsvorrichtung nach Anspruch 1, wobei die Steuereinheit (100) konfiguriert ist, um die Möglichkeit des Ausfalls in Bezug auf einen Flüssigkeitsstand in einem Vorratsbehälter (4), der die Bremsflüssigkeit darin speichert, zu erfassen, wenn eine Differenz zwischen dem ersten Hydraulikdruck und dem zweiten Hydraulikdruck größer ist als ein vorbestimmter Druck.

3. Bremsvorrichtung nach Anspruch 2, wobei die Steuereinheit (100) konfiguriert ist, um zu bestimmen, dass der Ausfall ein Flüssigkeitsleck der Bremsflüssigkeit ist, wenn der Flüssigkeitsstand niedriger ist als ein vorbestimmter Flüssigkeitsstand und eine Änderungsrate der Differenz zwischen dem ersten Hydraulikdruck und dem zweiten Hydraulikdruck höher ist als eine vorbestimmte Änderungsrate.

4. Bremsvorrichtung nach Anspruch 2, wobei die Steuereinheit (100) konfiguriert ist, um eine Anweisung zum Erfassen eines Flüssigkeitslecks der Bremsflüssigkeit an die Hydraulikeinheit (6) auszugeben, wenn der Flüssigkeitsstand höher ist als ein vorbestimmter Flüssigkeitsstand.

5. Bremsvorrichtung nach Anspruch 4, wobei:
- der Radzylinderabschnitt (8) einen ersten Radzylinder (8a, 8d) und einen zweiten Radzylinder (8b, 8c) aufweist,
- der Verbindungsfluidkanal (11) einen ersten Verbindungsfluidkanal (11P), der mit dem ersten Radzylinder (8a, 8d) verbunden ist, und einen zweiten Verbindungsfluidkanal (11S), der mit dem zweiten Radzylinder (8b, 8c) verbunden ist, aufweist,
- der Hydrauliksensor (92) einen ersten Hydrauliksensor (92P), der zum Erfassen eines Hydraulikdrucks in dem ersten Verbindungsfluidkanal (11P) konfiguriert ist, und einen zweiten Hydrauliksensor (92S), der zum Erfassen eines Hydraulikdrucks in dem zweiten Verbindungsfluidkanal (11S) konfiguriert ist, aufweist,
- die Hydraulikeinheit (6) aufweist:
- einen Verbindungsfluidkanal (16P, 16S), der den ersten Verbindungsfluidkanal (11P) mit dem zweiten Verbindungsfluidkanal (11S) verbindet,
- ein erstes Verbindungsventil (26P), das in dem Verbindungsfluidkanal (16P, 16S) angeordnet und zum Verhindern einer Strömung des Bremsfluids, das aus dem Verbindungsfluidkanal (16P, 16S) in den ersten Verbindungsfluidkanal (11P) fließt, konfiguriert ist, und
- ein zweites Verbindungsventil (26S), das in dem Verbindungsfluidkanal (16P, 16S) angeordnet und zum Verhindern einer Strömung des Bremsfluids, das aus dem Verbindungsfluidkanal (16P, 16S) in den zweiten Verbindungsfluidkanal (11S) fließt, konfiguriert ist,
- die Pumpe (7) angeordnet ist, um die Bremsflüssigkeit in einen Abschnitt in dem Verbindungsfluidkanal (16P, 16S) abzugeben, der zwischen dem ersten Verbindungsventil (26P) und dem zweiten Verbindungsventil (26S) angeordnet ist, und
- die Steuereinheit (100) konfiguriert ist, um das erste Kommunikationsventil (26P) und das zweite Kommunikationsventil (26S) abwechselnd zum Öffnen/Schließen eine Vielzahl von Malen beim Antreiben der Pumpe (7) anzutreiben und danach das Auftreten des Fluidlecks des Bremsfluids basierend auf Werten zu erfassen, die durch den ersten Hydrauliksensor (92P) und den zweiten Hydrauliksensor (92S) erfasst sind.

6. Bremsvorrichtung nach Anspruch 4, wobei:
- der Radzylinderabschnitt (8) einen ersten Radzylinder (8a, 8d) und einen zweiten Radzylinder (8b, 8c) aufweist,
- der mindestens eine Verbindungsfluidkanal (11) einen ersten Verbindungsfluidkanal (11P), der mit dem ersten Radzylinder (8a, 8d) verbunden ist, und einen zweiten Verbindungsfluidkanal (11S), der mit dem zweiten Radzylinder (8b, 8c) verbunden ist, aufweist,
- der mindestens eine Hydrauliksensor (92) einen ersten Hydrauliksensor (92P), der zum Erfassen eines Hydraulikdrucks in dem ersten Verbindungsfluidkanal (11P) konfiguriert ist, und einen zweiten Hydrauliksensor (92S), der zum Erfassen eines Hydraulikdrucks in dem zweiten Verbindungsfluidkanal (11S) konfiguriert ist, aufweist,
- die Hydraulikeinheit (6) aufweist:
- einen Verbindungsfluidkanal (16P, 16S), der den ersten Verbindungsfluidkanal (11P) mit dem zweiten Verbindungsfluidkanal (11S) verbindet,
- ein erstes Verbindungsventil (26P), das in dem Verbindungsfluidkanal (16P, 16S) angeordnet und zum Verhindern einer Strömung des Bremsfluids, das aus dem Verbindungsfluidkanal (16P, 16S) in den ersten Verbindungsfluidkanal (11P) fließt, konfiguriert ist, und
- ein zweites Verbindungsfluidventil (26S), das in dem Verbindungsfluidkanal (16P, 16S) angeordnet und zum Verhindern einer Strömung des Bremsfluids, das aus dem Verbindungsfluidkanal (16P, 16S) in den zweiten Verbindungsfluidkanal (11S) fließt, konfiguriert ist,
- die Pumpe (7) angeordnet ist, um die Bremsflüssigkeit in einen Abschnitt in dem Verbindungsfluidkanal (16P, 16S) abzugeben, der zwischen dem ersten Verbindungsventil (26P) und dem zweiten Verbindungsventil (26S) angeordnet ist, und
- die Steuereinheit (100) konfiguriert ist, um das erste Kommunikationsventil (26P) und das zweite Kommunikationsventil (26S) beim Antreiben der Pumpe (7) in Ventilschließrichtungen anzutreiben und danach das Auftreten des Fluidlecks des Bremsfluids basierend auf durch den ersten Hydrauliksensor (92P) und den zweiten Hydrauliksensor (92S) erfassten Werten zu erfassen.

7. Bremsvorrichtung nach Anspruch 1, wobei der erste Hydraulikdruck ein Hydraulikdruck in dem Verbindungsfluidkanal (11) ist, der basierend auf einer instantan gemessenen Anzahl von Umdrehungen des Motors (7a) bestimmt ist, die durch den Drehzahlerfassungsabschnitt (7b) erfasst ist.

8. Bremsvorrichtung nach Anspruch 1, wobei der erste Hydraulikdruck ein Hydraulikdruck in dem Verbindungsfluidkanal (11) ist, der basierend auf einer vorgespeicherten Anzahl von Umdrehungen des Motors (7a) bestimmt ist, die durch den Drehzahlerfassungsabschnitt (7b) erfasst ist.

9. Bremsvorrichtung nach Anspruch 8, wobei die vorgespeicherte Anzahl von Umdrehungen des Motors (7a) ein fixierter Wert ist.

10. Bremsvorrichtung nach Anspruch 1, wobei:
- der Radzylinderabschnitt (8) einen ersten Radzylinder (8a, 8d) und einen zweiten Radzylinder (8b, 8c) aufweist,
- der Verbindungsfluidkanal (11) einen ersten Verbindungsfluidkanal (11P), der mit dem ersten Radzylinder (8a, 8d) verbunden ist, und einen zweiten Verbindungsfluidkanal (11S), der mit dem zweiten Radzylinder (8b, 8c) verbunden ist, aufweist,
- der Hydrauliksensor (92) einen ersten Hydrauliksensor (92P), der zum Erfassen eines Hydraulikdrucks in dem ersten Verbindungsfluidkanal (11P) konfiguriert ist, und einen zweiten Hydrauliksensor (92S), der zum Erfassen eines Hydraulikdrucks in dem zweiten Verbindungsfluidkanal (11S) konfiguriert ist, aufweist,
- die Hydraulikeinheit (6) aufweist:
- einen Verbindungsfluidkanal (16P, 16S), der den ersten Verbindungsfluidkanal (11P) mit dem zweiten Verbindungsfluidkanal (11S) verbindet,
- ein erstes Verbindungsventil (26P), das in dem Verbindungsfluidkanal (16P, 16S) angeordnet und zum Verhindern einer Strömung des Bremsfluids, das aus dem Verbindungsfluidkanal (16P, 16S) in den ersten Verbindungsfluidkanal (11P) fließt, konfiguriert ist,
- ein zweites Verbindungsventil (26S), das in dem Verbindungsfluidkanal (16P, 16S) angeordnet und zum Verhindern einer Strömung des Bremsfluidstroms, das aus dem Verbindungsfluidkanal (16P, 16S) in den zweiten Verbindungsfluidkanal (11S) fließt, konfiguriert ist,
- einen Rückflussfluidkanal (17), der einen Abschnitt in dem Verbindungsfluidkanal (16P, 16S), der zwischen dem ersten Verbindungsventil (26P) und dem zweiten Verbindungsventil (26S) angeordnet ist, mit einem Vorratsbehälter (4) zum Speichern der Bremsflüssigkeit darin verbindet, und
- ein Druckeinstellventil (27), das in dem Rückflussfluidkanal (17) angeordnet ist,
- die Pumpe (7) angeordnet ist, um die Bremsflüssigkeit in einen Abschnitt in dem Verbindungsfluidkanal (16P, 16S) abzugeben, der zwischen dem ersten Verbindungsventil (26P) und dem zweiten Verbindungsventil (26S) angeordnet ist, und
- der erste Hydraulikdruck basierend auf einer Abgabekapazität der aus der Pumpe (7) abgegebenen Bremsflüssigkeit und einer Durchgangsflüssigkeitsmenge der Bremsflüssigkeit, die durch das Druckeinstellventil (27) fließt, geschätzt ist.

11. Bremsvorrichtung nach Anspruch 1, wobei der Ausfall ein Flüssigkeitsleck der Bremsflüssigkeit ist.

12. Verfahren zum Erfassen eines Ausfalls in einer Bremsvorrichtung, umfassend:
- Erfassen der Anzahl von Umdrehungen eines Motors (7a), der zum Antreiben einer Pumpe (7) konfiguriert ist, wobei die Pumpe (7) konfiguriert ist, um Bremsflüssigkeit in einen Verbindungsfluidkanal (11) abzugeben, der mit einem Radzylinderabschnitt (8) verbunden ist; und
- Erfassen einer Möglichkeit eines Ausfalls basierend auf einer Differenz zwischen einem ersten Hydraulikdruck in dem Verbindungsfluidkanal (11), der basierend auf der Anzahl von Umdrehungen des Motors (7a) bestimmt wird, und einem zweiten Hydraulikdruck, der durch einen ersten Hydrauliksensor (92) erfasst wird, der zum Erfassen eines Hydraulikdrucks in dem Verbindungsfluidkanal (11) konfiguriert ist.

## Revendications

1. Appareil de freinage,
comprenant :
- une unité hydraulique (6) ;
- une unité de commande (100) ; et
- une partie de cylindre de roue (8),
dans lequel l'unité hydraulique (6) comprend :
- au moins un passage de liquide de raccordement (11) raccordé à la partie de cylindre de roue (8),
- une pompe (7) configurée pour être entraînée par un moteur (7a) pour refouler le liquide de frein vers le passage de liquide de raccordement (11),
- une partie de détection de nombre de rotations (7b) configurée pour détecter un nombre de rotations du moteur (7a), et
- au moins un capteur hydraulique (92) configuré pour détecter une pression hydraulique dans le passage de liquide de raccordement (11), et
dans lequel l'unité de commande (100) est configurée pour détecter une possibilité d'une défaillance sur la base d'une première pression hydraulique dans le passage de liquide de raccordement (11) qui est déterminée sur la base d'un nombre de rotations du moteur (7a) et d'une deuxième pression hydraulique détectée par le capteur hydraulique (92).

2. Appareil de freinage selon la revendication 1, dans lequel l'unité de commande (100) est configurée pour détecter la possibilité de la défaillance liée à un niveau de liquide dans un réservoir (4) stockant le liquide de frein dans celui-ci lorsqu'une différence entre la première pression hydraulique et la deuxième pression hydraulique est supérieure à une pression prédéterminée.

3. Appareil de freinage selon la revendication 2, dans lequel l'unité de commande (100) est configurée pour déterminer que la défaillance est une fuite de liquide du liquide de frein lorsque le niveau de liquide est inférieur à un niveau de liquide prédéterminé et un taux de changement de la différence entre la première pression hydraulique et la deuxième pression hydraulique est supérieur à un taux de changement prédéterminé.

4. Appareil de freinage selon la revendication 2, dans lequel l'unité de commande (100) est configurée pour délivrer en sortie une instruction pour détecter une fuite de liquide du liquide de frein à l'unité hydraulique (6) lorsque le niveau de liquide est supérieur à un niveau de liquide prédéterminé.

5. Appareil de freinage selon la revendication 4, dans lequel :
- la partie de cylindre de roue (8) comprend un premier cylindre de roue (8a, 8d) et un deuxième cylindre de roue (8b, 8c),
- le passage de liquide de raccordement (11) comprend un premier passage de liquide de raccordement (11P) raccordé au premier cylindre de roue (8a, 8d) et un deuxième passage de liquide de raccordement (11S) raccordé au deuxième cylindre de roue (8b, 8c),
- le capteur hydraulique (92) comprend un premier capteur hydraulique (92P) configuré pour détecter une pression hydraulique dans le premier passage de liquide de raccordement (11P) et un deuxième capteur hydraulique (92S) configuré pour détecter une pression hydraulique dans le deuxième passage de liquide de raccordement (11S),
- l'unité hydraulique (6) comprend :
- un passage de liquide de communication (16P, 16S) raccordant le premier passage de liquide de raccordement (11P) et le deuxième passage de liquide de raccordement (11S) l'un à l'autre,
- une première soupape de communication (26P) disposée dans le passage de liquide de communication (16P, 16S) et configurée pour interdire un écoulement du liquide de frein se dirigeant du passage de liquide de communication (16P, 16S) au premier passage de liquide de raccordement (11P), et
- une deuxième soupape de communication (26S) disposée dans le passage de liquide de communication (16P, 16S) et configurée pour interdire un écoulement du liquide de frein se dirigeant du passage de liquide de communication (16P, 16S) au deuxième passage de liquide de raccordement (11S),
- la pompe (7) est disposée de manière à refouler le liquide de frein vers une partie dans le passage de liquide de communication (16P, 16S) qui est située entre la première soupape de communication (26P) et la deuxième soupape de communication (26S), et
- l'unité de commande (100) est configurée pour entraîner en alternance la première soupape de communication (26P) et la deuxième soupape de communication (26S) pour les ouvrir/fermer une pluralité de fois tout en entraînant la pompe (7), et, après cela, pour détecter l'apparition de la fuite de liquide du liquide de frein sur la base de valeurs détectées par le premier capteur hydraulique (92P) et le deuxième capteur hydraulique (92S).

6. Appareil de freinage selon la revendication 4, dans lequel :
- la partie de cylindre de roue (8) comprend un premier cylindre de roue (8a, 8d) et un deuxième cylindre de roue (8b, 8c),
- l'au moins un passage de liquide de raccordement (11) comprend un premier passage de liquide de raccordement (11P) raccordé au premier cylindre de roue (8a, 8d) et un deuxième passage de liquide de raccordement (11S) raccordé au deuxième cylindre de roue (8b, 8c),
- l'au moins un capteur hydraulique (92) comprend un premier capteur hydraulique (92P) configuré pour détecter une pression hydraulique dans le premier passage de liquide de raccordement (11P) et un deuxième capteur hydraulique (92S) configuré pour détecter une pression hydraulique dans le deuxième passage de liquide de raccordement (11S),
- l'unité hydraulique (6) comprend :
- un passage de liquide de communication (16P, 16S) raccordant le premier passage de liquide de raccordement (11P) et le deuxième passage de liquide de raccordement (11S) l'un à l'autre,
- une première soupape de communication (26P) disposée dans le passage de liquide de communication (16P, 16S) et configurée pour interdire un écoulement du liquide de frein se dirigeant du passage de liquide de communication (16P, 16S) au premier passage de liquide de raccordement (11P), et
- une deuxième soupape de communication (26S) disposée dans le passage de liquide de communication (16P, 16S) et configurée pour interdire un écoulement du liquide de frein se dirigeant du passage de liquide de communication (16P, 16S) au deuxième passage de liquide de raccordement (11S),
- la pompe (7) est disposée de manière à refouler le liquide de frein vers une partie dans le passage de liquide de communication (16P, 16S) qui est située entre la première soupape de communication (26P) et la deuxième soupape de communication (26S), et
- l'unité de commande (100) est configurée pour entraîner la première soupape de communication (26P) et la deuxième soupape de communication (26S) dans des directions de fermeture de soupape tout en entraînant la pompe (7), et, après cela, pour détecter l'apparition de la fuite de liquide du liquide de frein sur la base de valeurs détectées par le premier capteur hydraulique (92P) et le deuxième capteur hydraulique (92S).

7. Appareil de freinage selon la revendication 1, dans lequel la première pression hydraulique est une pression hydraulique dans le passage de liquide de raccordement (11) qui est déterminée sur la base d'un nombre mesuré instantanément de rotations du moteur (7a), qui est détecté par la partie de détection de nombre de rotations (7b).

8. Appareil de freinage selon la revendication 1, dans lequel la première pression hydraulique est une pression hydraulique dans le passage de liquide de raccordement (11) qui est déterminée sur la base d'un nombre pré-stocké de rotations du moteur (7a), qui est détecté par la partie de détection de nombre de rotations (7b).

9. Appareil de freinage selon la revendication 8, dans lequel le nombre pré-stocké de rotations du moteur (7a) est une valeur fixe.

10. Appareil de freinage selon la revendication 1, dans lequel :
- la partie de cylindre de roue (8) comprend un premier cylindre de roue (8a, 8d) et un deuxième cylindre de roue (8b, 8c),
- le passage de liquide de raccordement (11) comprend un premier passage de liquide de raccordement (11P) raccordé au premier cylindre de roue (8a, 8d) et un deuxième passage de liquide de raccordement (11S) raccordé au deuxième cylindre de roue (8b, 8c),
- le capteur hydraulique (92) comprend un premier capteur hydraulique (92P) configuré pour détecter une pression hydraulique dans le premier passage de liquide de raccordement (11P) et un deuxième capteur hydraulique (92S) configuré pour détecter une pression hydraulique dans le deuxième passage de liquide de raccordement (11S),
- l'unité hydraulique (6) comprend :
- un passage de liquide de communication (16P, 16S) raccordant le premier passage de liquide de raccordement (11P) et le deuxième passage de liquide de raccordement (11S) l'un à l'autre,
- une première soupape de communication (26P) disposée dans le passage de liquide de communication (16P, 16S) et configurée pour interdire un écoulement du liquide de frein se dirigeant du passage de liquide de communication (16P, 16S) au premier passage de liquide de raccordement (11P),
- une deuxième soupape de communication (26S) disposée dans le passage de liquide de communication (16P, 16S) et configurée pour interdire un écoulement du liquide de frein se dirigeant du passage de liquide de communication (16P, 16S) au deuxième passage de liquide de raccordement (11S),
- un passage de liquide d'écoulement de retour (17) raccordant une partie dans le passage de liquide de communication (16P, 16S) qui est située entre la première soupape de communication (26P) et la deuxième soupape de communication (26S), et un réservoir (4) pour stocker le liquide de frein dans celui-ci, et
- une soupape de réglage de pression (27) disposée dans le passage de liquide d'écoulement de retour (17),
- la pompe (7) est disposée de manière à refouler le liquide de frein vers une partie dans le passage de liquide de communication (16P, 16S) qui est située entre la première soupape de communication (26P) et la deuxième soupape de communication (26S), et
- la première pression hydraulique est estimée sur la base d'une capacité de refoulement du liquide de frein refoulé de la pompe (7) et d'une quantité de liquide passant du liquide de frein qui passe à travers la soupape de réglage de pression (27).

11. Appareil de freinage selon la revendication 1, dans lequel la défaillance est une fuite de liquide du liquide de frein.

12. Procédé pour détecter une défaillance dans un appareil de freinage, comprenant :
- la détection du nombre de rotations d'un moteur (7a) configuré pour entraîner une pompe (7), la pompe (7) étant configurée pour refouler un liquide de frein vers un passage de liquide de raccordement (11) raccordé à une partie de cylindre de roue (8) ; et
- la détection d'une possibilité d'une défaillance sur la base d'une différence entre une première pression hydraulique dans le passage de liquide de raccordement (11) qui est déterminée sur la base du nombre de rotations du moteur (7a) et une deuxième pression hydraulique détectée par un capteur hydraulique (92) configuré pour détecter une pression hydraulique dans le passage de liquide de raccordement (11).
